# EUROPÄISCHE PATENTSCHRIFT

(11) **EP 0 534 330 B1**
(45) Veröffentlichungstag und Bekanntmachung des Hinweises auf die Patenterteilung: **11.12.1996**
(21) Anmeldenummer: 92116045.3
(22) Anmeldetag: 19.09.1992
(51) Int. Cl.: B61D 37/00

(54) **Ablage für Gepäck, Hüte und dggl., insbesondere zum Einbau in Eisenbahnwaggons**
Rack for luggage, hats and the like, especially for installation in railway carriages
Support pour bagages, chapeaux et semblable, en particulier pour installation dans des voitures ferroviaires

(30) Priorität: 24.09.1991 DE 4131813
(43) Veröffentlichungstag der Anmeldung: 31.03.1993
(73) Patentinhaber: EISEN- UND DRAHTWERK ERLAU AKTIENGESELLSCHAFT, D-73431 Aalen (DE)
(72) Erfinder: Müller, Anton, W-7080 Aalen-Unterkochen (DE); Schinko, Hermann, W-7088 Hüttlingen (DE); Wirth, Heinz, W-7080 Aalen 1 (DE); Grupp, Gerhard, W-7080 Aalen (DE)
(74) Vertreter: Kohl, Karl-Heinz

(56) Entgegenhaltungen:
- DE-U- 8 902 538
- FR-A- 2 486 005

## Beschreibung

Die Erfindung betrifft eine Ablage für Gepäck, Hüte und dgl., insbesondere zum Einbau in Eisenbahnwaggons, nach dem Oberbegriff des Anspruches 1 (siehe auch FR-A-2 486 005).

Bei solchen bekannten Ablagen ist der Träger zur Befestigung an der Halterung an seinen Enden mit flanschartigen Verbreiterungen versehen, die an der Halterung angeschraubt werden. Die Ablagefläche mit dem teilweise umlaufenden Träger und dem Anschlußteil bilden eine vorgefertigte Baueinheit, die an die jeweiligen Einbauabmessungen angepaßt ist. Aus diesem Grunde müssen die Ablagen für unterschiedliche Einbauverhältnisse jeweils gesondert gefertigt werden. Solche Ablagen sind darum teuer.

Der Erfindung liegt die Aufgabe zugrunde, die gattungsgemäße Ablage so auszubilden, daß sie in unterschiedlich bemessene Einbauorte einfach eingebaut werden kann, ohne daß die Ablage selbst konstruktiv aufwendig ausgebildet ist.

Diese Aufgabe wird bei der gattungsgemäßen Ablage erfindungsgemäß mit den kennzeichnenden Merkmalen des Anspruches 1 gelöst.

Für die erfindungsgemäße Ablage wird ein Baukastensystem verwendet, das aus dem Träger, den Seitenteilen mit der Ablagefläche und den Anschlußteilen besteht. Diese vorgefertigen Teile werden zu der jeweils benötigten Ablage zusammengesetzt. Infolge des Baukastensystems können unterschiedlich geformte Ablagen sehr einfach zusammengebaut werden, die sich in unterschiedlich gestaltete Einbauräume einfach einbauen lassen. Lediglich die Ablageflächen müssen an die unterschiedlichen Abmessungen angepaßt werden, während die Träger und die Anschlußteile unabhängig von den Einbauverhältnissen sind. Somit läßt sich aus nur wenigen Bauteilen jede gewünschte Ablage herstellen und einbauen.

Weitere Merkmale der Erfindung ergeben sich aus den weiteren Ansprüchen, der Beschreibung und den Zeichnungen.

Die Erfindung wird anhand einiger in den Zeichnungen dargesteller Ausführungsbeispiele näher erläutert. Es zeigen
- Fig. 1: den Grundriß eines Eisenbahnwaggons mit verschiedenen erfindungsgemäßen Ablagen, die als Gepäckablagen ausgebildet sind,
- Fig. 2: im Grundriß den Eisenbahnwaggon gemäß Fig. 1, in dem als Hut- und Kleinablagen ausgebildete erfindungsgemäße Ablagen befestigt sind,
- Fig. 3: in vergrößerter Darstellung teilweise im Schnitt und teilweise in Ansicht eine erste Ausführungsform eines Befestigungselementes, mit dem benachbarte Ablagen waggonseitig befestigt werden können,
- Fig. 4: teilweise in Vorderansicht und teilweise im Schnitt das Befestigungselement gemäß Fig. 3 sowie eine zweite Ausführungsform eines Befestigungselementes,
- Fig. 5: im Schnitt und in vergrößerter Darstellung eine Befestigungseinrichtung, mit der die als Hut- und Kleinablagen ausgebildeten Ablagen waggonseitig befestigt werden können,
- Fig. 6: in Seitenansicht und teilweise im Schnitt übereinander angeordnete Gepäckablagen und Hutablagen, die an einer Stütze befestigt sind,
- Fig. 7: einen Schnitt längs der Linie VII-VII in Fig. 6,
- Fig. 8: in Vorderansicht einen Einhängehaken, der an der Gepäckablage gemäß Fig. 6 schwenkbar befestigt ist,
- Fig. 9: eine weitere Ausführungsform einer erfindungsgemäßen Ablage, die als Hut- oder Kleinablage ausgebildet ist,
- Fig. 10: in vergrößerter Darstellung die Befestigung einer Hut- oder Kleinablage an einer weiteren Ausführungsform eines Befestigungselementes,
- Fig. 11: teilweise in Ansicht und teilweise im Schnitt die Lagerung einer Gepäckablage in einem Befestigungselement entsprechend Fig. 10,
- Fig. 12: in Stirnansicht und teilweise im Schnitt das Befestigungselement gemäß Fig. 11 zur Aufnahme einer Gepäckablage,
- Fig. 13: einen Schnitt längs der Linie XIII-XIII in Fig. 12,
- Fig. 14: in Seitenansicht eine weitere Ausführungsform eines Befestigungselementes, mit dem zwei benachbarte Ablagen gleichzeitig gehaltert werden können,
- Fig. 15: das Befestigungselement gemäß Fig. 14 teilweise in Stirnansicht und teilweise im Schnitt,
- Fig. 16: eine Blende der erfindungsgemäßen Gepäckablage,
- Fig. 17: einen Schnitt längs der Linie XVII-XVII in Fig. 16,
- Fig. 18: eine weitere Ausführungsform einer Blende für eine als Hutablage ausgebildete erfindungsgemäße Ablage in Seitenansicht,
- Fig. 19: einen Schnitt längs der Linie XIX-XIX in Fig. 18,
- Fig. 20: einen Schnitt längs der Linie XX-XX in Fig. 18,
- Fig. 21: eine Draufsicht auf eine winkelförmig ausgebildete erfindungsgemäße Ablage,
- Fig. 22: einen Träger der Ablage gemäß Fig. 21,
- Fig. 23: in vergrößerter Darstellung einen Schnitt längs der Linie XXIII-XXIII in Fig. 21,
- Fig. 24: in vergrößerter Darstellung einen Schnitt längs der Linie XXIV-XXIV in Fig. 21 ohne Darstellung einer Blende,
- Fig. 25: in Draufsicht eine weitere Ausführungsform einer winkelförmig ausgebildeten erfindungsgemäßen Ablage,
- Fig. 26: einen Träger der Ablage gemäß Fig. 25 in Seitenansicht,
- Fig. 27: in vergrößerter Darstellung einen Schnitt längs der Linie XXVII-XXVII in Fig. 25,
- Fig. 28: in vergrößerter Darstellung einen Schnitt längs der Linie XXVIII-XXVIII in Fig. 25, jedoch ohne Blende,
- Fig. 29: eine Draufsicht auf eine als Wandablage ausgebildete erfindungsgemäße Ablage,
- Fig. 30: in Seitenansicht einen Träger der Ablage gemäß Fig. 29,
- Fig. 31: in vergrößerter Darstellung einen Schnitt längs der Linie XXXI-XXXI in Fig. 29, ohne Darstellung einer Blende,
- Fig. 32: in vergrößerter Darstellung einen Schnitt längs der Linie XXXII-XXXII in Fig. 29.

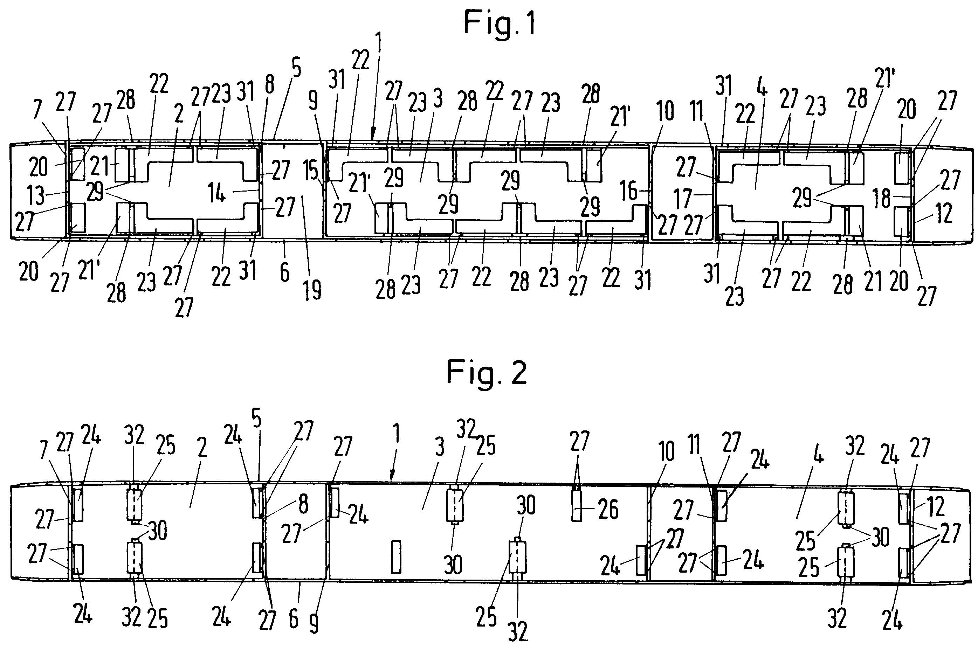

Die Ablagen sind in einem Eisenbahnwaggon 1 (Fig. 1 und 2) vorgesehen. Im dargestellten Ausführungsbeispiel hat er drei Abteile 2 bis 4, die von senkrecht zu den Waggonlängsseiten 5, 6 liegenden Querwänden 7 bis 12 begrenzt sind. Der Eisenbahnwaggon 1 kann auch mehr als die drei Abteile 2 bis 4, aber auch weniger oder nur ein einziges Abteil aufweisen. Im Ausführungsbeispiel sind in den Querwänden 7 bis 12 Türen 13 bis 18 vorgesehen, die in Höhe eines den Eisenbahnwaggon 1 in dessen Längsrichtung durchsetzenden Ganges 19 angeordnet sind. Der Gang 19 ist in Fig. 1 durch eine strichpunktierte Linie gekennzeichnet.

An den Waggonlängsseiten 5, 6 sowie an den Querwänden 7 bis 12 sind verschiedene Ablagen befestigt. Fig. 1 zeigt Gepäckablagen, unterhalb denen mit Abstand die in Fig. 2 dargestellten Hut- und Kleinablagen angeordnet sind. An der dem Abteil 2 zugewandten Innenseite der Querwand 7 sind beiderseits der Tür 13 Wandablagen 20 befestigt. Mit Abstand zu ihnen sind im Abteil 2 an den Längsseiten 5 und 6 Endablagen 21 befestigt, an die in Längsrichtung des Eisenbahnwaggons 1 jeweils eine winkelförmige Ablage 22 und 23 anschließt. An sie schließen weitere winkelförmige Ablagen 22 und 23 an, die spiegelsymmetrisch zu ihnen angeordnet sind, bezogen auf die Längs- und die zwischen ihnen verlaufende Quermittelebene des Eisenbahnwaggons 1. Für die insgesamt vier winkelförmigen Ablagen im Abteil 2 werden nur zwei Arten von winkelförmigen Ablagen eingesetzt, die spiegelsymmetrisch zueinander ausgebildet sind. Im Abteil 2 sind die Ablagen beiderseits des Ganges 19 auf gleicher Höhe und in gleicher Anordnung vorgesehen sowie spiegelsymmetrisch zur Längsmittelebene des Eisenbahnwaggons 1 angeordnet.

Im anschließenden Abteil 3 sind die an beiden Waggonlängsseiten 5 und 6 vorgesehenen Gepäckablagen, bezogen auf die Längsmittelebene des Eisenbahnwaggons 1, versetzt zueinander angeordnet. An der dem Abteil 3 zugewandten Innenseite der Querwand 9 ist der eine Schenkel der winkelförmigen Ablage 22 befestigt, dessen anderer Schenkel an der Längswand 5 des Eisenbahnwaggons 1 befestigt ist. An diese Ablage schließt die Ablage 23 an, die wiederum spiegelsymmetrisch zur Ablage 22 angeordnet ist. Auf die winkelförmige Ablage 23 folgt wiederum die winkelförmige Ablage 22, deren kurzer Schenkel parallel zum kurzen Schenkel der Ablage 23 verläuft und deren langer Schenkel an der Längswand 5 befestigt ist. An diese winkelförmige Ablage 22 schließt wiederum die winkelförmige Ablage 23 an, deren langer Schenkel in Verlängerung des langen Schenkels der Ablage 22 verläuft und wie dieser an der Seitenwand 5 des Eisenbahnwaggons 1 befestigt ist. An die winkelförmige Ablage 23 schließt wiederum die Endablage 21 an, die mit Abstand von der Querwand 10 liegt.

Auf der gegenüberliegenden Längsseite 6 des Eisenbahnwaggons sind mit Abstand von der Querwand 9 hintereinander eine Endablage 21, eine winkelförmige Ablage 23, eine winkelförmige Ablage 22, wiederum eine winkelförmige Ablage 23 und eine winkelförmige Ablage 22 befestigt. Der kurze Schenkel der letzten winkelförmigen Anlage 22 ist an der Querwand 10 befestigt.

Im Abteil 4 sind, von der Querwand 11 ausgehend, an der Längsseite 5 des Eisenbahnwaggons 1 hintereinander die winkelförmigen Ablagen 22 und 23 und die Endablage 21 befestigt. Mit Abstand zur Endablage 21 ist an der Querwand 12 die Wandablage 20 befestigt.

Auf der gegenüberliegenden Längsseite 6 des Eisenbahnwaggons 1 sind, von der Querwand 11 ausgehend, nacheinander die winkelförmigen Ablagen 23 und 22 und die Endablage 21 befestigt. Mit Abstand zur Endablage 21 ist an der Querwand 12 die Wandablage montiert. Wie Fig. 1 zeigt, sind die Gepäckablagen im Abteil 4, bezogen auf die Längsmittelebene des Eisenbahnwaggons 1, spiegelsymmetrisch zueinander angeordnet. Die beiden winkelförmigen Ablagen 22 und 23 an den beiden Längsseiten 5 und 6 schließen jeweils mit ihren langen Schenkeln mit geringem Abstand voneinander aneinander an.

In sämtlichen Abteilen 2 bis 4 sind die Endablagen 21 jeweils so angeordnet, daß sie von der entsprechenden Längsseite 5, 6 des Eisenbahnwaggons 1 senkrecht in Richtung auf den Gang 19 abstehen.

Im Bereich unterhalb der Gepäckablagen sind, wie Fig. 2 zeigt, die Hut- und Kleinablagen befestigt. Im Abteil 2 sind die einzelnen Ablagen, bezogen auf die Längsmittelebene des Eisenbahnwaggons, spiegelsymmetrisch angeordnet. An der Querwand 7 ist beiderseits der Längsmittelebene jeweils eine einarmige Kleinablage 24 befestigt. Sie liegt im Bereich unterhalb der jeweiligen Wandablage 20. Mit Abstand von der Kleinablage 24 ist an den Längsseiten 5 und 6 im Bereich unterhalb der Endablagen 21, 21' jeweils eine doppelarmige Hutablage 25 vorgesehen. An der Querwand 8 ist beiderseits der Längsmittelebene des Eisenbahnwaggons 1 wiederum jeweils eine Kleinablage 24 befestigt.

Im Abteil 3 ist auf der der Längsseite 5 zugewandten Hälfte an der Querwand 9 eine Kleinablage 24 befestigt, die im Bereich unterhalb der entsprechenden winkelförmigen Ablage 22 angeordnet ist. Mit Abstand zur Kleinablage 24 ist im Bereich unterhalb der parallel zueinander liegenden Schenkel der winkelförmigen Ablagen 23 und 22 eine doppelarmige Hutablage 25 vorgesehen, die an der Längsseite 5 befestigt ist. Mit Abstand zur Hutablage 25 ist schießlich im Bereich unterhalb der Endablage 21' an der Längsseite 5 des Eisenbahnwaggons 1 eine einarmige Hutablage 26 befestigt.

An der gegenüberliegenden Längsseite 6 des Eisenbahnwaggons 1 ist mit Abstand von der Querwand 9 eine einarmige Hutablage 26 befestigt. Mit Abstand zu ihr ist an der Längsseite 6 eine doppelarmige Hutablage 25 vorgesehen. An der Querwand 10 ist nahe der Längsseite 6 die Kleinablage 24 befestigt. Sie liegt im Bereich unterhalb des kurzen Schenkels der winkelförmigen Ablage 22, während die doppelarmige Hutablage 25 im Bereich unterhalb der kurzen Schenkel der benachbart zueinander liegenden winkelförmigen Ablagen 22 und 23 angeordnet ist.

Im Abteil 4 schließlich ist an der Querwand 11 beiderseits der Längsmittelebene des Eisenbahnwaggons 1 jeweils eine Kleinablage 24 befestigt, die im Bereich unterhalb der kurzen Schenkel der Gepäckablagen 22 und 23 liegt. Mit Abstand von den Kleinablagen 24 ist an der Längsseite 5 und an der Längsseite 6 jeweils eine doppelarmige Hutablage 25 befestigt, die im Bereich unterhalb der kurzen Schenkel der winkelförmigen Ablagen 22 und 23 sowie der Endablagen 21 und 21' liegt. An der Querwand 12 ist beiderseits der Längsmittelebene des Eisenbahnwaggons 1 wiederum jeweils eine Kleinablage 24 befestigt.

Die Hut- und Kleinablagen im Abteil 4 sind, entsprechend der Anordnung im Abteil 2, wiederum spiegelsymmetrisch zur Längsmittelebene des Eisenbahnwaggons 1 angeordnet.

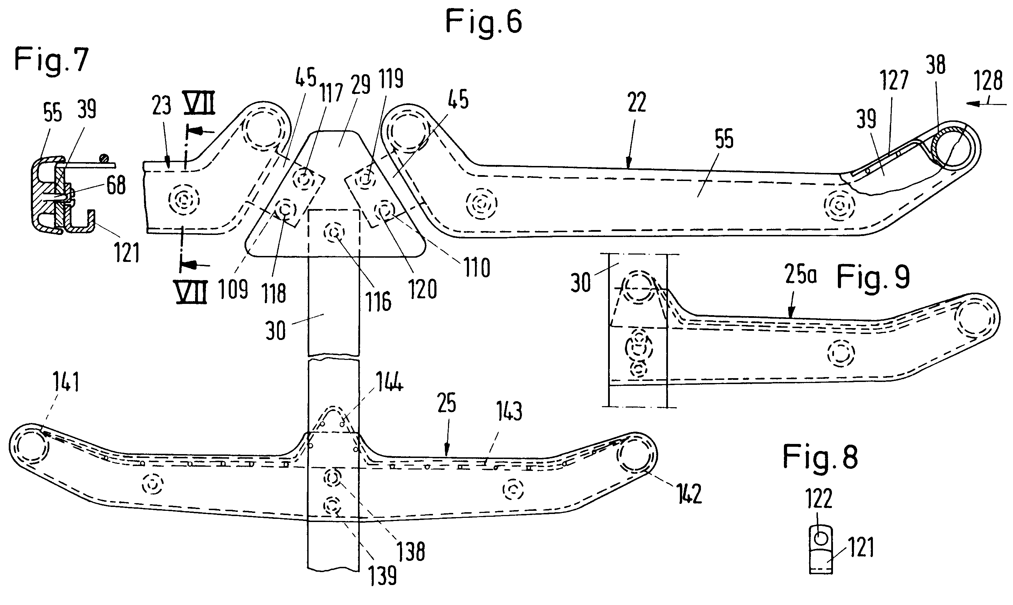

Die Wandablagen 20 sind jeweils mit zwei Befestigungselementen 27 an der Querwand 7 befestigt. Die nachfolgenden Endablagen 21 und 21' sind mit den benachbarten winkelförmigen Ablagen 22 und 23 über ein Befestigungselement 28 gemeinsam an den Längsseiten 5 und 6 des Eisenbahnwaggons 1 befestigt. An ihrem dem Gang 19 zugewandten Ende sind die Endablagen 21, 21' und die benachbarten winkelförmigen Ablagen 22, 23 mit weiteren Befestigungselementen 29 gemeinsam an einer vertikalen Stütze 30 (Fig. 6) befestigt. Die von der Endablage 21, 21' abgewandten Enden der langen Schenkel der winkelförmigen Ablagen 22, 23 sind jeweils mit einem Befestigungselement 27 an der Längsseitenwand 5 bzw. 6 befestigt. Auch die benachbarten Enden der benachbarten winkelförmigen Ablagen 23 und 22 sind mit einem solchen Befestigungselement 27 an den Längsseiten 5 und 6 des Eisenbahnwaggons 1 gehalten. Benachbart zur Querwand 8 sind die beiden Ablagen 22 und 23 jeweils mit einem Befestigungselement 31 an den Längsseiten 5 und 6 befestigt. Die kurzen, parallel zur Querwand 8 liegenden Schenkel der Ablagen 22, 23 sind am gangseitigen Ende jeweils mit einem Befestigungselement 27 an der Querwand 8 befestigt. Im Abteil 3 ist zur Befestigung des kurzen, parallel zur Querwand 9 liegenden Schenkels der Ablage 22 an der Querwand 9 das Befestigungselement 27 vorgesehen, mit dem die Ablage 22 am gangseitigen Ende dieses kurzen Schenkels gehalten ist. Nahe der Querwand 9 ist diese Ablage 22 mit dem Befestigungselement 31 an der Längsseite 5 befestigt. Am gegenüberliegenden Ende des langen Schenkels ist die Ablage 22 mit dem Befestigungselement 27 an der Längsseite 5 des Eisenbahnwaggons 1 gehalten. Auch das benachbarte Ende des langen Schenkels der nachfolgenden Ablage 23 ist mit einem solchen Befestigungselement 27 an der Längsseite 5 befestigt. Diese winkelförmige Ablage 23 ist mit der nachfolgenden Ablage 22 über das Befestigungselement 28 gemeinsam an der Längsseite 5 gehalten. Am gangseitigen Ende der kurzen Schenkel ist das Befestigungselement 29 vorgesehen, das an der Stütze 30 (Fig. 6) vorgesehen ist und mit dem die beiden nebeneinander liegenden Ablagen 23 und 22 gemeinsam gehalten werden. Das freie Ende des langen Schenkels der Ablage 22 ist mit dem Befestigungselement 27 an der Längsseite 5 befestigt. Auch das benachbarte Ende des langen Schenkels der nachfolgenden Ablage 23 ist mit einem solchen Befestigungselement 27 an der Längsseite 5 gehalten. Am anderen Ende des langen Schenkels ist diese winkelförmige Ablage 23 mit der nachfolgenden Endablage 21' durch das gemeinsame Befestigungselement 28 an der Längsseite 5 befestigt. Das gangseitige Ende der Endablage 21' ist zusammen mit dem freien Ende des parallel zur Endablage 21' verlaufenden kurzen Schenkels der Ablage 23 durch das gemeinsame Befestigungselement 29 an der Stütze 30 gehalten. An der gegenüberliegenden Seite sind, ausgehend von der Querwand 9, die Endablage 21' und die nachfolgende winkelförmige Ablage 23 in gleicher Weise mit dem Befestigungselement 28 gemeinsam an der Längsseite 6 befestigt, während sie am gangseitigen Ende durch das gemeinsame Befestigungselement 29 an der Stütze 30 gehalten sind. Das freie Ende des langen Schenkels der Ablage 23 ist mit dem Befestigungselement 27 an der Längsseite 6 befestigt. Auch das benachbarte Ende des langen Schenkels der nachfolgenden Ablage 22 ist mit einem solchen Befestigungselement 27 an der Längsseite 6 gehalten. Am anderen Ende des langen Schenkels ist die Ablage 22 mit der nachfolgenden Ablage 23 durch das Befestigungselement 28 gemeinsam an der Längsseite 6 montiert. Die parallel und mit geringem Abstand zueinander liegenden kurzen Schenkel der Ablagen 22, 23 sind am gangseitigen Ende durch das Befestigungselement 29 gemeinsam an der Stütze 30 gehalten. Das freie Ende des langen Schenkels der Ablage 23 ist mit dem Befestigungselement 27 an der Längsseite 6 des Eisenbahnwaggons 1 befestigt. Auch das benachbarte freie Ende des langen Schenkels der nachfolgenden Ablage 22 ist mit einem solchen Befestigungselement 27 an der Längsseite 6 gehalten. Am gegenüberliegenden Ende ist die Ablage 22 unmittelbar benachbart zur Querwand 10 mit dem Befestigungselement 31 an der Längsseite 6 befestigt. Das freie Ende des kurzen, parallel zur Querwand 10 verlaufenden Schenkels der Ablage 22 ist mit dem Befestigungselement 27 an der Querwand 10 gehalten.

Im Abteil 4 sind die beiderseits der Längsmittelebene des Eisenbahnwaggons 1 liegenden Ablagen 22 und 23 in gleicher Weise mit den Befestigungselementen 27 an der Querwand 11 und an der Längsseite 5 bzw. 6 und mit den Befestigungselementen 31 nahe der Querwand 11 an den Längsseiten 5 und 6 befestigt. Die nachfolgenden Ablagen 22 und 23 sind mit der folgenden Endablage 21 und 21' in der beschriebenen Weise mit den Befestigungselementen 28 und 29 gemeinsam an der jeweiligen Längsseite 5, 6 und an der jeweiligen Stütze 30 befestigt. Außerdem sind die freien Enden der langen, parallel zu den Längsseiten 5 bzw. 6 des Eisenbahnwaggons verlaufenden Schenkel der Ablagen 22, 23 mit jeweils einem Befestigungselement 27 an diesen Längsseiten befestigt.

Die Wandablagen 20 sind an der Querwand 12 mit jeweils zwei Befestigungselementen 27 gehalten.

Die Kleinablagen 24 (Fig. 2) sind ebenfalls durch jeweils zwei Befestigungselemente 27 an der Querwand 27 befestigt. Die beiden Hutablagen 25 sind an den Längsseiten 5 und 6 des Eisenbahnwaggons 1 jeweils mit einem Befestigungselement 32 montiert, während sie gangseitig jeweils an einer Stütze 30 gehalten sind. An der Querwand 8 sind die beiden Kleinablagen 24 wiederum mit jeweils zwei Befestigungselementen 27 befestigt.

Im Abteil 3 sind die beiden Kleinablagen 24 jeweils mit zwei Befestigungselementen 27 an den Querwänden 9 und 10 befestigt. Die einarmigen Hutablagen 26 sind ebenfalls mit jeweils zwei Befestigungselementen 27 an der zugehörigen Längsseite 5 und 6 montiert. Die doppelarmigen Hutablagen 25 sind an den Längsseiten 5 bzw. 6 jeweils mit einem Befestigungselement 32 befestigt, während sie gangseitig an jeweils einer Stütze 30 montiert sind.

Im Abteil 4 sind die Kleinablagen 24 an den beiden Querwänden 11 und 12 jeweils mit zwei Befestigungselementen 27 befestigt. Die doppelarmigen Hutablagen 25 sind an den Längsseiten 5 bzw. 6 jeweils mit einem Befestigungselement 32 montiert, während sie gangseitig wiederum an jeweils einer Stütze 30 gehalten sind.

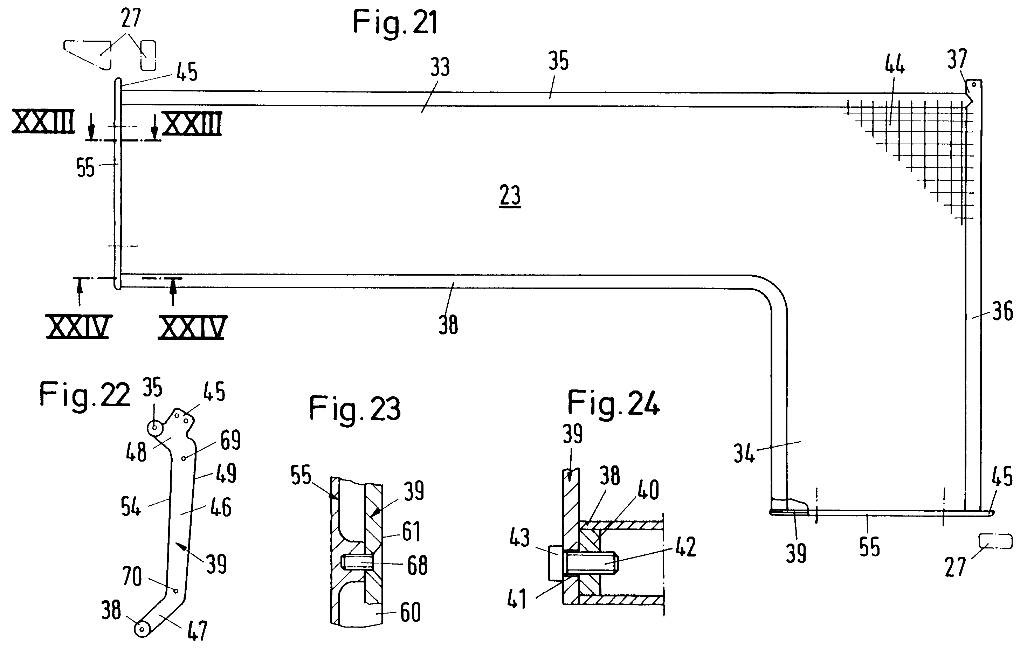

Die winkelförmige Ablage 23 soll nunmehr anhand der Fig. 21 bis 24 im einzelnen erläutert werden. Sie hat einen langen Schenkel 33 und einen rechtwinklig dazu liegenden kurzen Schenkel 34. Der lange Schenkel wird an seiner vom freien Ende des kurzen Schenkels 34 abgewandten Seite von einem geraden Profilrohr 35 begrenzt, das sich vom freien Ende des langen Schenkels 33 bis zu einem senkrecht hierzu liegenden Profilrohr 36 erstreckt, welches den kurzen Schenkel 34 auf der vom freien Ende des langen Schenkels 33 abgewandten Seite begrenzt. Auch das Profilrohr 36 verläuft über die gesamte Länge des kurzen Schenkels 34 gerade. Die beiden Profilrohre 35 und 36 können jede beliebige Querschnittsform haben. Vorzugsweise ist zumindest das Profilrohr 38 mit kreisförmigem Querschnitt versehen. Wie Fig. 21 zeigt, steht das Profilrohr 36 senkrecht über das Profilrohr 35 vor. Dieser überstehende Rohrteil 37 bildet ein Anschlußstück, mit dem die Ablage 23 in noch zu beschreibender Weise am Befestigungselement 28 befestigt wird. Das Profilrohr 35 ist am Profilrohr 36 vorzugweise verschweißt.

Der lange Schenkel 33 wird an der gegenüberliegenden Längsseite von einem weiteren Profilrohr 38 begrenzt und erstreckt sich vom freien Ende dieses Schenkels 33 bis zum freien Ende des kurzen Schenkels. Am Übergang zwischen den beiden Schenkeln 33 und 34 der Ablage 23 verläuft das Profilrohr 38 viertelkreisförmig. Infolge dieser Ausbildung wird eine Schweißstelle in diesem Übergangsbereich vermieden. Das Profilrohr 38 kann wiederum jeden geeigneten Querschnitt haben; vorzugsweise hat es kreisförmigen Querschnitt. Die freien Enden der beiden Profilrohre 33 und 38 sind durch einen Träger 39 miteinander verbunden (Fig. 22), der vorteilhaft als Stanzteil ausgebildet ist und dadurch einfach und kostengünstig hergestellt werden kann. Wie Fig. 24 für das Profilrohr 38 zeigt, ist eine Mutter 40 in das freie Profilrohrende eingesetzt, vorzugsweise eingeschweißt.

In gleicher Weise ist auch am freien Ende des Profilrohres 35 eine solche Mutter eingeschweißt. Der Träger 39 ist mit Durchtrittsöffnungen 41 für Schrauben 42 versehen, die in die Muttern 40 geschraubt werden. Der Schraubenkopf 43 stützt sich an der von den Profilrohren 35 und 38 abgewandten Außenseite des Trägers 39 ab. Auf diese Weise läßt sich der Träger 39 einfach und sicher an den beiden Profilrohren 35 und 38 befestigen.

Das andere freie Ende des Profilrohres 38 und das benachbarte Ende des Profilrohres 36 sind ebenfalls durch einen Träger 39 in der beschriebenen Weise miteinander verbunden (Fig. 21).

Die von den Profilrohren 35, 36, 38 und den Trägern 39 umschlossene Fläche wird von einer Ablagefläche 34 ausgefüllt, die im bevorzugten Ausführungsbeispiel durch ein Drahtgitter gebildet wird. Sie kann aber auch aus einem Kunststoff, aus Holz, aus Metall, aus einem Lochblech, aus einem Textil und dgl. bestehen. Ein Drahtgitter oder ein Lochblech als Ablagefläche 44 gewährleistet eine einfache Durchlüftung der Ablagefläche.

Die Träger 39 sind an einem Ende (Fig. 22) mit einem laschenförmigen Ansatz 45 versehen, der rechteckigen Umriß hat und mit dem der Träger 39 in das entsprechende Befestigungselement eingesetzt wird. Bei der winkelförmigen Ablage 23 ragen die Träger 39 mit diesem Ansatz 45 senkrecht über das Profilrohr 35 bzw. das Profilrohr 36. In Fig. 21 sind mit strichpunktierten Linien die Befestigungselemente 27 angedeutet, in welche diese Ablage 23 mit den Ansätzen 45 gesteckt wird.

Die winkelförmige Ablage 23 ist somit mit drei Steckansätzen 45 und 37 versehen, mit denen sie mit den jeweiligen Befestigungselementen steckverbunden werden kann.

Der Träger 39 hat ein Mittelstück 46 (Fig. 22), das an beiden Enden stumpfwinklig in ein Endstück 47 und 48 übergeht. Das Endstück 47 ist länger als das gegenüberliegende Endstück 48 und schmaler als dieses. Am freien Ende der freien Endstücke 47 und 48 sind die Durchtrittsöffnungen 41 vorgesehen, durch welche die Schrauben 42 gesteckt werden, mit denen der Träger 39 an den Profilrohren 35 und 38 bzw. 36 und 38 lösbar befestigt wird. Die Endstücke 47 und 48 sind divergierend zueinander angeordnet. Infolge ihrer in der Einbaulage der Ablage 23 schräg aufwärts gerichteten Lage verhindern sie, daß auf der Ablagefläche 44 abgelegte Gepäckstücke unbeabsichtigt herunterrutschen können. Vom kürzeren Endstück 48 steht der Ansatz 45 ab, der auf der von der Ablagefläche 44 abgewandten Seite über das Endstück 48 ragt. Der in der Einbaulage untere Rand 49 des Mittelstücks 46 verläuft vom Endstück 48 aus unter einem geringen Winkel leicht aufwärts bis zum Endstück 47. Wie Fig. 22 zeigt, verjüngt sich das Mittelstück 46 vom Endstück 48 aus bis zum Endstück 47 vorzugsweise stetig. Dadurch kann der Träger 39, der in der Einbaulage der Ablage 23 vom zugehörigen Befestigungselement 27 aus frei nach außen ragt, sehr hohe Kräfte aufnehmen. Hinzu kommt, daß der Träger 39, der einschließlich des Ansatzes 45 in einer Ebene liegt, in der Einbaulage der Ablage 23 hochkant angeordnet ist. Auf diese Weise kann der Träger 39 in Verbindung mit der beschriebenen Formgebung auch bei sehr geringer Dicke hohe Kräfte einwandfrei aufnehmen. Der Ansatz 45 ist ausreichend breit ausgebildet, so daß am Übergang vom Ansatz 45 zum Endstück 48 eine ausreichende Trägerbreite vorgesehen ist.

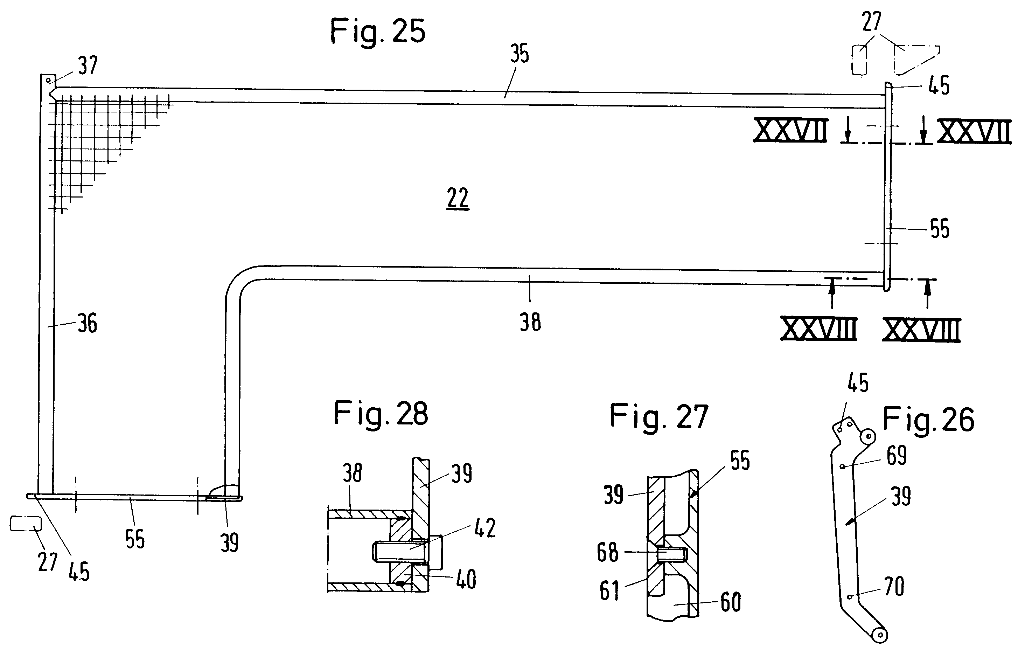

Die winkelförmige Ablage 22 (Fig. 25 bis 28) ist spiegelsymmetrisch zur Ablage 23 ausgebildet. Im übrigen hat sie die gleiche konstruktive Ausbildung wie die Ablage 23. Sie weist somit ebenfalls die Profilrohre 35, 36 und 38 auf, die an ihren Enden jeweils durch einen Träger 39 miteinander verbunden sind. Das Profilrohr 36 ragt mit dem Anschlußstück 37 senkrecht über das Profilrohr 35. Die beiden Träger 39 ragen mit ihren Ansätzen 45 ebenfalls senkrecht über das Profilrohr 36 bzw. das Profilrohr 35. Die winkelförmige Ablage 22 ist somit ebenfalls mit drei Steckansätzen 37, 45 versehen, über die es mit den entsprechenden Befestigungselementen 27, 28 steckverbunden werden kann. Die Träger 39 werden mit den Schrauben 42 lösbar mit den entsprechenden Profilrohren 35, 36 und 38 verbunden, die hierzu mit den Muttern 40 versehen sind, die in die freien Enden der entsprechenden Profilrohre eingeschweißt sind. Abgesehen von der spiegelsymmetrischen Ausbildung sind die Träger 39 gleich ausgebildet wie die Träger gemäß Fig. 22.

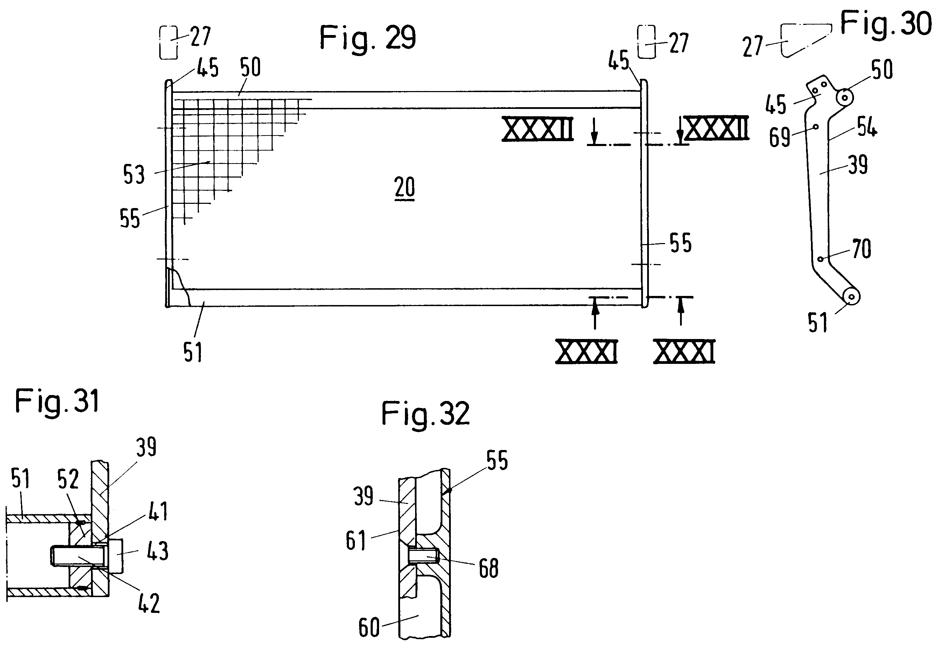

Die Wandablage 20 (Fig. 30 bis 32) hat zwei parallel zueinander liegende Profilrohre 50 und 51, die jeden beliebigen Querschnitt haben können, vorzugsweise jedoch kreisförmigen Querschnitt aufweisen. In die beiden Enden jedes Profilrohres 50, 51 ist jeweils eine Mutter 52 (Fig. 31) eingesetzt. Vorzugsweise eingeschweißt. Beide Enden der Profilrohre 50, 51 sind durch jeweils einen der Träger 39 miteinander verbunden. Sie haben die Durchtrittsöffnungen 41 für die Schrauben 42, mit denen die Träger 39 lösbar mit den Profilrohren 50, 51 verbunden werden können. Wie Fig. 31 zeigt, werden die Schrauben 42 in die entsprechenden Muttern 52 der Profilrohre 50, 51 geschraubt, wobei die Schraubenköpfe 43 die Träger 39 fest gegen die freien Enden der Profilrohres 50, 51 drücken. Die Ansätze 45 der Träger 39 stehen, wie bei den winkelförmigen Ablagen 22, 23, in Draufsicht auf die Ablage gesehen, senkrecht über das Profilrohr 50 vor. Mit den vorstehenden Ansätzen 45 wird die Wandablage 20 in das entsprechende Befestigungselement 27 gesteckt, das in den Fig. 29 und 30 durch eine strichpunktierte Linie schematisch dargestellt ist.

Die Wandablage 20 hat wiederum eine Ablagefläche 53, die vorteilhaft durch ein Drahtgitter gebildet wird, aber wiederum aus einem Lochblech, aus Kunststoff, aus Holz, aus Metall, aus Textil oder dgl. bestehen kann. Die Ablagefläche 53 hat ebenso wie die Ablagefläche 44 der winkelförmigen Ablagen 22 und 23 eine ausreichend hohe Tragfähigkeit, um die auf den jeweiligen Ablagen abgelegten Gepäckstücke sicher tragen zu können. Das Drahtgitter 44, 53 der Ablagen 20, 22, 23 ist in noch zu beschreibender Weise an den entsprechenden Profilrohren 35, 36, 38, und 51 befestigt. Die Ablagefläche 44, 53 ist in ihrer Formgebung an den Verlauf des in der Einbaulage oberen Randes 54 des Trägers 39 angepaßt.

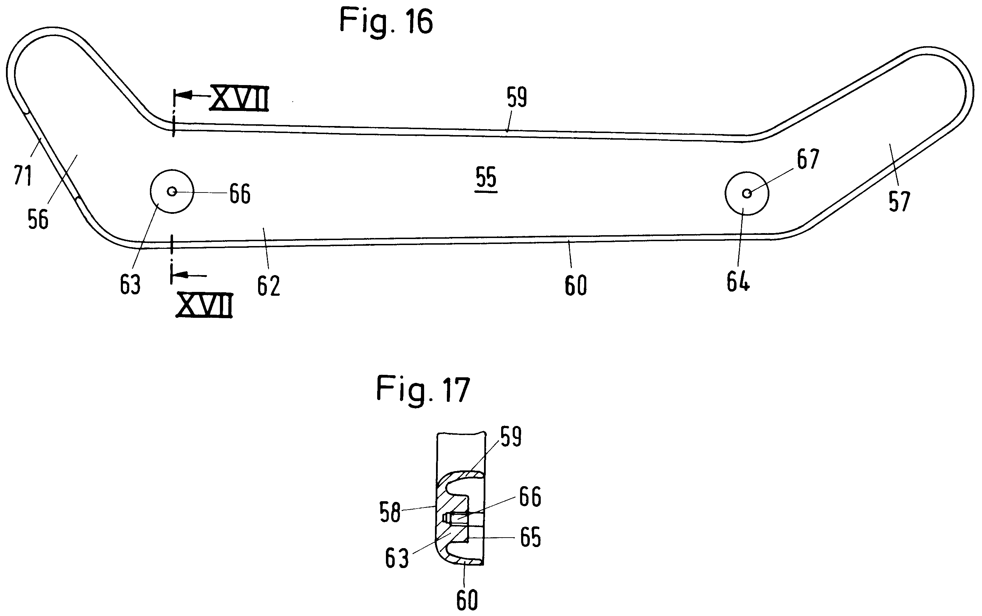

Auf die Träger 39 wird jeweils eine Blende 55 aufgesetzt (Fig. 16, 17, 23, 27 und 32). Sie soll anhand der Fig. 16 und 17 im folgenden näher beschrieben werden. Die Blende 45 wird lösbar am jeweiligen Träger 39 befestigt, so daß sie bei Bedarf einfach ausgewechselt werden kann. In ihrer Umrißform ist die Blende 55 an die Umrißform des Trägers 39 angepaßt. Die Blende 55 wird von außen auf die jeweiligen Träger 39 aufgesetzt, so daß diese vollständig abgedeckt sind. Da die Schraubenköpfe 43 an der Außenseite der Träger 39 liegen (Fig. 23, 28 und 31), werden sie von der Blende 55 ebenfalls abgedeckt. Die jeweilige Ablage 20, 22 und 23 erhält somit an den Enden ein gefälliges Aussehen. Wie Fig. 16 zeigt, sind die schräg aufwärts verlaufenden Endabschnitte 56 und 57 der Blende 55 stirnseitig abgerundet, so daß keine Verletzungsgefahr besteht. Auch wird dadurch verhindert, daß Gepäckstücke, die sich auf den Gepäckablagen befinden, durch scharfe Kanten oder dgl. beschädigt werden. Der Endabschnitt 56 deckt das Endstück 48 des Trägers 39 und der Endabschnitt 57 das Endstück 47 des Trägers 39 ab.

Die Blende 55 hat eine ebene Außenseite 58 (Fig. 17), die in Höhenrichtung, in der Gebrauchslage der Gepäckablage gesehen, teilkreisförmig gekrümmt in Ränder 59 und 60 übergeht und in der Einbaulage den plattenartigen Träger 39 am oberen Rand 54 sowie am unteren Rand 49 übergreifen. Der Träger 39 liegt somit verdeckt in der jeweiligen Blende 55. Wie sich aus den Fig. 23, 27 und 32 ergibt, erstrecken sich die Ränder 59 und 60 bis in Höhe der dem jeweiligen Profilrohrende zugewandten Innenseite 61 des Trägers 39.

Die Blende 55 ist vorteilhaft lösbar mit dem Träger 39 verbunden. Hierzu hat die Blende 55 im Übergangsbereich zwischen dem Mittelstück 62 und den Endabschnitten 56 und 57 jeweils einen im Querschnitt kreisförmigen Vorsprung 63 und 64, der vorteilhaft einstückig mit der Blende 55 ausgebildet ist. Sie sind auf der dem Träger 39 zugewandten Innenseite der Blende 55 etwa in deren halber Höhe vorgesehen. Vorteilhaft sind die Vorsprünge 63, 64 und die Dicke der Träger 39 kürzer als die Ränder 59 und 60 der Blende 55. Die Stirnseite 65 der Vorsprünge 63, 64 ist vorteilhaft eben, so daß der Träger 39 an den beiden Vorsprüngen eine einwandfreie Anlage findet. In die Stirnseite 65 der Vorsprünge 63, 64 mündet eine Gewindebohrung 66, 67. In sie wird eine Schraube 68 geschraubt (Fig. 23, 27 und 32), deren Kopf versenkt in der Innenseite 61 des Trägers 39 liegt. Wie die Fig. 22, 26 und 30 zeigen, ist der Träger 39 mit entsprechenden Durchtrittsöffnungen 69 und 70 versehen. Da die Schrauben 68 von der Innenseite des Trägers 39 aus eingeschraubt werden, sind sie in der Einbaulage der Gepäckablagen von außen nicht sichtbar. Die Blenden 55 haben eine geschlossene Außenseite, so daß die Befestigungsteile 42 und 68 nicht verschmutzt oder beschädigt werden können.

Die Blende 55 weist zum Durchtritt des Ansatzes 45 des Trägers 39 im Endabschnitt 56 im Rand 60 eine randoffene Durchbrechung 71 auf.

Die Blende 55 wird vorteilhaft aus Leichtmetall, insbesondere Aluminium, im Druckgußverfahren hergestellt. Für die rechte und die linke Seite der jeweiligen Gepäckablage sind rechte und linke Blenden 55 vorgesehen, die bis auf ihre spiegelsymmetrische Form gleich ausgebildet sind.

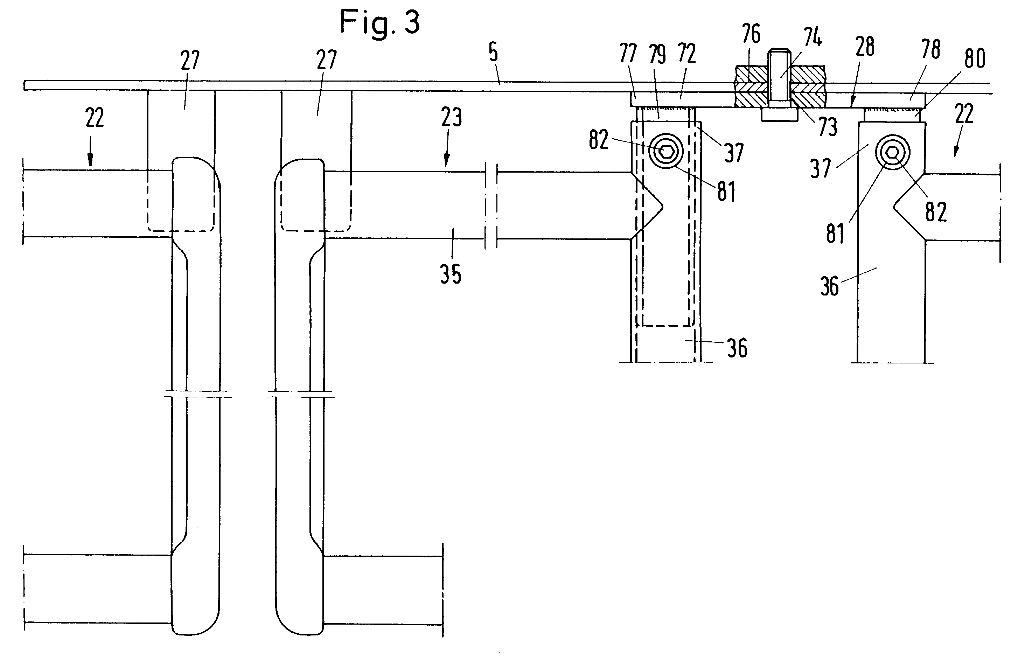

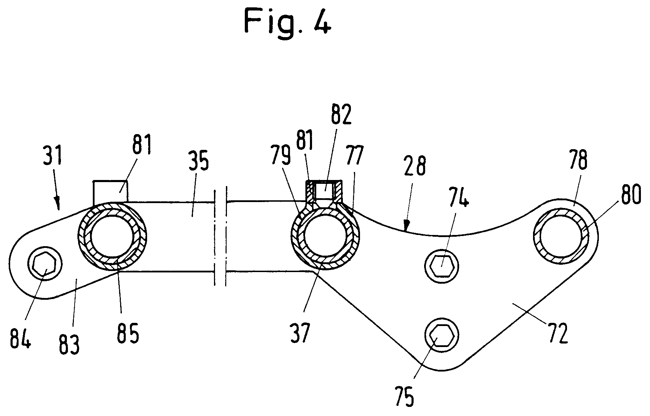

Anhand der Fig. 3 und 4 wird die Ausbildung des Befestigungselementes 28 näher beschrieben, mit dem zwei nebeneinander liegende Gepäckablagen miteinander verbunden werden können (Fig. 1). In Fig. 3 werden beispielsweise zwei winkelförmige Ablagen 22 und 23 gemeinsam über das Befestigungselement 28 an der Längsseite 5 des Eisenbahnwaggons 1 befestigt. Das Befestigungselement 28 hat ein etwa herzförmig ausgebildetes plattenförmiges Trägerteil 72, das mit seiner einen Seite flächig an der Längsseite 5 des Eisenbahnwaggons anliegt. Es ist mit zwei mit Abstand übereinanderliegenden Durchtrittsöffnungen 73 für Schrauben 74 und 75 versehen. Sie werden in an der Rückseite der Längsseite 5 vorgesehene Muttern 76 geschraubt. Die herzförmige Ausbildung des Trägerteils 72 in Verbindung mit der flächigen Anlage an der Längsseitenwand 5 des Eisenbahnwaggons 1 stellt sicher, daß die bei Belastung der Gepäckablage auftretenden Kräfte zuverlässig vom Trägerteil 72 auf die Längsseitenwand 5 übertragen werden.

Von den beiden oberen Enden 77 und 78 des Trägerteils 72 stehen senkrecht zwei vorzugsweise gleich lange Ansätze 79 und 80 vor, auf die die Anschlußstücke 37 der winkelförmigen Ablagen 22 und 23 (Fig. 21 und 25) gesteckt werden. Da die Anschlußstücke 37 durch die Enden der Profilrohre 36 gebildet werden, sind für die Anschlußstücke keine zusätzlichen Teile erforderlich. Die Ansätze 79, 80 des Befestigungselementes 28 haben einem dem Innenquerschnitt der Anschlußstücke 37 entsprechenden Außenquerschnitt, so daß die Ablagen 22 und 23 spielfrei auf den Ansätzen 79 und 80 gelagert werden können.

In Fig. 4 ist der Übersichtlichkeit wegen das auf dem Ansatz 80 sitzende Anschlußstück 37 der Ablage 22 nicht dargestellt. Vorteilhaft werden die Ansätze 79 und 80 durch kurze Rohrstücke gebildet, die senkrecht vom Trägerteil 72 abstehen und an ihm angeschweißt sind. Mit den Ansätzen 79, 80 ist es sehr einfach möglich, während des Einbaus der Gepäckablage Toleranzen in der Einbaulage einwandfrei auszugleichen. Die Ablagen 22, 23 können auf den Ansätzen 79, 80 quer zur Längsseitenwand 5 des Eisenbahnwaggons 1 stufenlos verschoben werden. Ist die Einbaulage erreicht, werden die Ablagen 22, 23 klemmend auf den Ansätzen 79 und 80 befestigt. Hierzu sind die Anschlußstücke 37 mit einem hülsenartigen Vorsprung 81 versehen, in dessen Innengewinde eine Madenschraube 82 geschraubt ist. Sie liegt vorteilhaft versenkt im Vorsprung 81. Mit ihr wird die jeweilige Ablage 22, 23 in der Einbaulage auf den Ansätzen 79 bzw. 80 festgeklemmt. Anstelle der Madenschraube 82 kann auch jedes andere geeignete Klemmmittel verwendet werden, wie beispielsweise Klemmkeile, die im Anschlußstück 37 der Profilrohre 36 gelagert sind. Die Ansätze 79, 80 können auch auf ihrer der Klemmschraube 82 zugewandten Seite mit einer feinen Verzahnung versehen sein, so daß zusätzlich zum Klemmschluß auch ein Formschluß zwischen den Anschlußstücken 37 und den Ansätzen 79, 80 erreicht wird.

Wie Fig. 3 zeigt, ist das vom Befestigungselement 28 abgewandte Ende der winkelförmigen Ablage 23 über das Befestigungselement 27 an der Längsseitenwand 5 befestigt. Die benachbarte winkelförmige Ablage 22 ist an diesem Ende ebenfalls mit dem Befestigungselement 27 an der Längsseitenwand gehalten. Die in Fig. 3 dargestellte Anordnung der Winkelablagen entspricht der Anordnung der Gepäckablagen in Fig. 1, von der Querwand 9 aus beginnend.

Fig. 4 zeigt noch das Befestigungselement 31, mit dem die jeweilige Gepäckablage an der Längsseitenwand 5 bzw. 6 im Bereich einer der Querwände des Eisenbahnwaggons befestigt wird (Fig. 1). Dieses Befestigungselement hat ebenfalls ein plattenartiges Trägerteil 83, das mit einer Schraube 84 in gleicher Weise wie das Befestigungselement 28 an der zugehörigen Längsseitenwand 5 bzw. 6 des Eisenbahnwaggons 1 befestigt wird. Das Trägerteil 83 ist laschenförmig ausgebildet und weist an einem Ende die Durchtrittsöffnung für die Schraube 84 und am anderen Ende einen senkrecht von ihm abstehenden Ansatz 85 auf, der vorteilhaft gleich ausgebildet ist wie die Ansätze 79, 80 des Befestigungselementes 28. Auf den Ansatz 85 wird die jeweilige Ablage mit dem Anschlußstück 37 aufgeschoben. Die Ablage läßt sich auf dem Ansatz 85 stufenlos verschieben, so daß Toleranzen in der Einbaulage einfach ausgeglichen werden können. Mit der im Vorsprung 81 untergebrachten Schraube läßt sich dann das Anschlußstück 37 in der gewünschten Einbaulage auf dem Ansatz 85 in der beschriebenen Weise festklemmen.

Die beschriebenen Befestigungselemente 28 und 31 bilden Ausgleichseinrichtungen, mit denen Maßtoleranzen innerhalb des Eisenbahnwaggons einfach und genau ausgeglichen werden können.

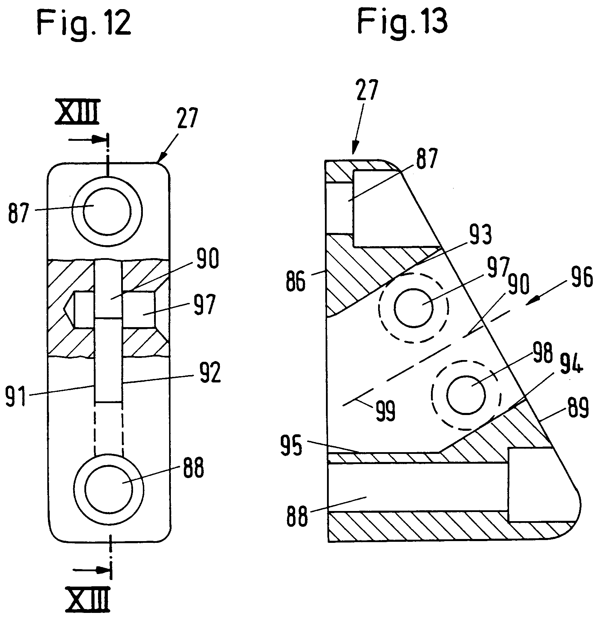

Zur Aufnahme der Ansätze 45 der Träger 39 dienen die Befestigungselemente 27 und 29, wie anhand von Fig. 1 erläutert worden ist. Im folgenden wird das Befestigungselement 27 anhand der Fig. 12 und 13 näher erläutert. Dieses Befestigungselement wird aus Druckguß gefertigt und ist einstückig ausgebildet. In Stirnansicht (Fig. 12) hat es Rechteckform mit abgerundeten Kanten und in Seitenansicht Trapezform. Die Rückseite 86, mit der das Befestigungselement 27 an der Längsseitenwand 5, 6 oder an einer der Querwände 7 bis 12 des Eisenbahnwaggons 1 anliegt, ist eben ausgebildet, so daß das Befestigungselement sicher abgestützt wird und die Kräfte zuverlässig auf die waggonseitigen Teile übertragen kann. Nahe dem in der Einbaulage oberen und unteren Rand wird das Befestigungselement 27 von je einer Durchtrittsöffnung 87 und 88 durchsetzt, die in die ebene Rückseite 86 sowie in die in der Einbaulage schräg aufwärts und nach hinten geneigte Vorderseite 89 münden. Die Durchtrittsöffnungen 87, 88 haben, von der Vorderseite 89 ausgehend, zunächst einen größeren Durchmesser und gehen über einen Absatz in einen im Durchmesser kleineren Öffnungsteil über. Im größeren Öffnungsteil liegen versenkt die Köpfe der Befestigungsschrauben, mit denen das Befestigungselement 27 waggonseitig befestigt wird. Die Durchtrittsöffnungen 87, 88 liegen in halber Breite des Befestigungselementes 27 (Fig. 12). Im Bereich zwischen den beiden Durchtrittsöffnungen 87 und 88 wird das Befestigungselement 87 von einem schmalen Schlitz 90 durchsetzt, dessen Breite und Höhe an den Querschnitt des Ansatzes 45 des Trägers 39 angepaßt ist. Der Schlitz 90 wird von zwei parallel zueinander liegenden ebenen Seitenflächen 91 und 92 (Fig. 12) begrenzt, deren Abstand voneinander nur geringfügig größer ist als die Dicke des Ansatzes 45 des Trägers 39. Dadurch läßt sich der Träger mit seinem Ansatz mühelos in den Schlitz 90 einsetzen. Die Seitenflächen 91 und 92 des Schlitzes 90 werden durch Querflächen 93 und 94 verbunden, die ebenfalls parallel zueinander verlaufen und von der schrägen Vorderseite 89 aus senkrecht verlaufen. Die obere Querfläche 93 verläuft nahezu bis zur Rückseite und ist länger als die gegenüberliegende Querfläche 94, die nur bis etwa in halbe Breite des Befestigungselementes 27 verläuft. Dort geht sie stumpfwinklig in eine senkrecht zur Rückseite 86 und bis zu dieser sich erstreckende Fläche 95 über. Auch sie verläuft eben wie die Querflächen 93 und 94. Die Querfläche 94 ist in Steckrichtung 96 des Ansatzes 45 des Trägers 39 so lang, daß der Ansatz 45 ausreichend weit in das Befestigungselement 27 gesteckt werden kann. Der Abstand der beiden Querflächen 93 und 94 voneinander ist wiederum nur geringfügig größer als die Höhe des Ansatzes 45, so daß der Träger 39 auch in Höhenrichtung nahezu spielfrei im Befestigungselement 27 gehalten ist.

Der Schlitz 90 wird von zwei mit Abstand voneinander liegenden Querbohrungen 97 und 98 durchsetzt, die als Sacklochbohrungen und Gewindebohrungen ausgebildet sind. Nach dem Einsetzen des Ansatzes 45 des Trägers 39 in den Schlitz 90 werden die Klemmschrauben in den Bohrungen 97, 98 angezogen und auf diese Weise der Ansatz 45 gegen die Seitenfläche 91 des Schlitzes 90 geklemmt. Da der Ansatz 45 nicht formschlüssig, sondern lediglich kraftschlüssig im Befestigungselement 27 gehalten wird, dient es ebenfalls als Ausgleichseinrichtung. Je nach Maßtoleranzen kann der Ansatz 45 des Trägers 39 unterschiedlich weit in den Schlitz 90 gesteckt und dann mit den Klemmschrauben festgeklemmt werden.

Die Längsachse 99 des Schlitzes 90 (Fig. 13) liegt unter einem spitzen Winkel, vorzugsweise unter etwa 30°, zur Horizontalen, in der Einbaulage gemessen, bzw. zur Fläche 95.

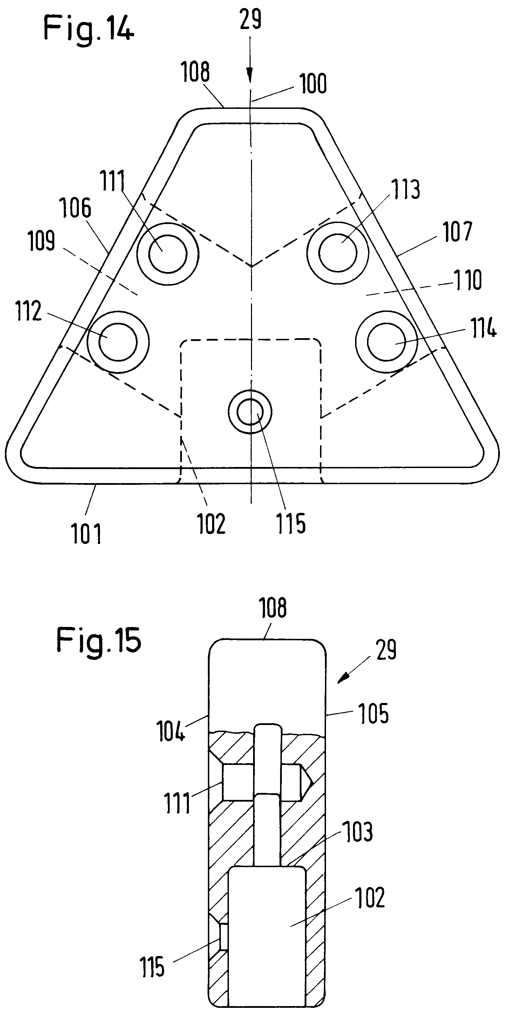

Die Fig. 14 und 15 zeigen das Befestigungselement 29, mit dem zwei Gepäckablagen gemeinsam befestigt werden können. In Vorderansicht (Fig. 15) hat das Befestigungselement 29 Rechteckform mit abgerundeten Kanten und in Seitenansicht (Fig. 14) Trapezform. Das Befestigungselement 29 ist spiegelsymmetrisch zur Längsmittelebene 100 (Fig. 14) ausgebildet und ist vorzugsweise ein Druckgußteil, das vorteilhaft aus Aluminium besteht. In der ebenen Unterseite 101 ist mittig eine Stecköffnung 102 vorgesehen, so daß das Befestigungselement 29 auf die Stütze 30 (Fig. 6) gesteckt werden kann. Die Stecköffnung 102 hat Rechteckform und einen ebenen Boden 103, mit dem das Befestigungselement auf der Stirnseite des Trägers 30 aufliegen kann.

Das Befestigungselement 29 hat zueinander parallele Seitenflächen 104 und 105, die durch von der Unterseite 101 aus konvergierende Stirnseiten 106 und 107 miteinander verbunden sind. Sie verbinden außerdem die Unterseite 101 mit der ebenen Oberseite 108.

In die Stirnseiten 106 und 107 mündet jeweils ein Schlitz 109 und 110, deren Querschnittsform an die Querschnittsform der Ansätze 45 der Träger 39 angepaßt ist. Die beiden Schlitze 109, 110 gehen ineinander über und sind mit der Stecköffnung 102 verbunden. Die Längsachsen der beiden Schlitze verlaufen ebenfalls jeweils spitzwinklig zur Unterseite 101 unter einem Winkel von vorzugsweise etwa 30°. Von der Seitenfläche 104 aus erstrecken sich in jeden Schlitz 109 und 110 jeweils zwei Gewindebohrungen 111 bis 114, in die Klemmschrauben zum Festklemmen der in den Schlitzen befindlichen Ansätze 45 der Träger 39 geschraubt werden können. Außerdem erstreckt sich von der Seitenfläche 104 aus in die Stecköffnung 102 eine weitere Gewindebohrung 115 für eine Klemmschraube, mit der das Befestigungselement 29 auf der Stütze 30 befestigt werden kann. Die Achse der Gewindebohrung 115 liegt in der Längsmittelebene 100.

Wie Fig. 1 zeigt, werden die Befestigungselemente 29 gangseitig angeordnet, um benachbarte Gepäckablagen gemeinsam zu haltern. Dies soll anhand von Fig. 6 näher erläutert werden. Die Stütze 30 ist im Ausführungsbeispiel ein Vierkantrohr, kann aber auch jeden anderen geeigneten Querschnitt haben. Entsprechend ist auch die Querschnittsform der Stecköffnung 102 ausgebildet. Die Stütze 30 ist gangseitig angeordnet und kann bis zum Boden des Eisenbahnwaggons verlaufen, aber auch an einer Sitzbank, an einem Sitz oder dgl. des Eisenbahnwaggons befestigt sein. Auf das freie Ende der Stütze 30 wird das Befestigungselement 29 aufgesteckt und mit einer in der Gewindebohrung 115 geschraubten Klemmschraube 116 festgeklemmt. Da keine formschlüssige Befestigung vorgesehen ist, kann das Befestigungselement 29 in Höhenrichtung der Stütze 30 stufenlos verstellt werden, um Maßtoleranzen auszugleichen. In jeder Lage läßt sich dann das Befestigungselement 29 mittels der Klemmschraube 116 an der Stütze 30 befestigen. In die beiden Schlitze 109 und 110 sind, wie Fig. 6 zeigt, die Ansätze 45 der Träger 39 mittels Klemmschrauben 117 bis 120 festgeklemmt. Auf diese Weise lassen sich zwei nebeneinanderliegende Gepäckablagen, beispielsweise die winkelförmigen Ablagen 22 und 23, gemeinsam an einer einzigen Stütze 30 gangseitig abstützen.

Wie Fig. 7 beispielhaft zeigt, kann an der der Ablagefläche der jeweiligen Gepäckablage zugewandten Innenseite des Trägers 39 ein Einhängehaken 121 vorzugsweise lösbar befestigt sein. Er hat eine Bohrung 122, durch welche die Schraube 68 ragt, mit der die Blende 55 am Träger 39 befestigt wird. Der Einhängehaken 121 ist vorteilhaft um die Achse der Schraube 68 schwenkbar. Er ist so angeordnet, daß er nicht nach unten über die Blende 55 ragt.

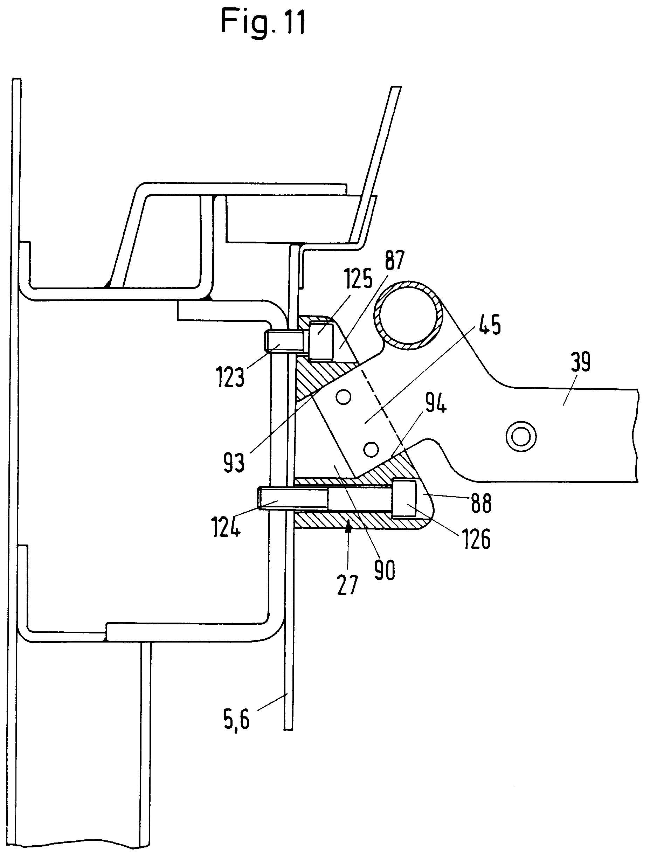

Fig. 11 zeigt das Befestigungselement 27, das mit Gewindebolzen 123 und 124 an der Längsseitenwand 5 bzw. 6 des Eisenbahnwaggons festgeschraubt ist. Die Köpfe 125 und 126 der Gewindebolzen liegen versenkt in den Durchtrittsöffnungen 87 und 88 des Befestigungselementes 27. Der Träger 39 ist mit seinem Ansatz 45 in den Schlitz 90 des Befestigungselementes 27 gesteckt und liegt mit seinem oberen und seinem unteren Rand an den Querflächen 93 und 94 des Schlitzes 90 an. Der Ansatz 45 ist so lang, daß das jeweilige Profilrohr der Ablage nicht am Befestigungselement 27 zur Anlage kommt. Dies gilt auch für das Befestigungselement 29 (Fig. 6). Auch hier sind die Ansätze 45 so lang, daß die Blende 55 und das entsprechende Profilrohr der Ablage 22, 23 nicht am Befestigungselement 29 zur Anlage kommen.

Um beim Aufschieben der Gepäckstücke auf die jeweilige Ablage eine Beschädigung der Gepäckstücke zu vermeiden, ist die aus einem Drahtgitter bestehende Ablagefläche 44 in vorteilhafter Weise an dem einen Teil der äußeren Umrandung der jeweiligen Gepäckablage bildenen Profilrohr befestigt. Wie Fig. 6 für die winkelförmige Ablage 22 zeigt, sind die senkrecht zum Profilrohr 38 verlaufenden Drähte 127 im Bereich vor dem Profilrohr 38 abwärts gebogen und an der von der Aufschiebeseite 128 abgewandten Seite am Profilrohr 38 befestigt, vorzugsweise angeschweißt. Dadurch bildet das Profilrohr 38 die in Aufschieberichtung äußere Begrenzung der Ablagefläche. Infolge des im Querschnitt kreisförmigen Profilrohres 38 lassen sich somit Gepäckstücke bequem und leicht auf die Ablagefläche 44 über das Profilrohr 38 hinwegschieben. Hierbei besteht nicht die Gefahr, daß das Gepäckstück an den Enden der Drähte 127 beschädigt wird. Die Drahtenden liegen geschützt hinter dem jeweiligen Profilrohr.

Bei allen Ablagen (Fig. 1 und 2), bei denen die Ablagefläche aus einem Drahtgitter besteht, sind die Drahtgitter vorteilhaft in der beschriebenen Weise an dem Aufschiebeende der Ablage an der äußeren Begrenzung befestigt.

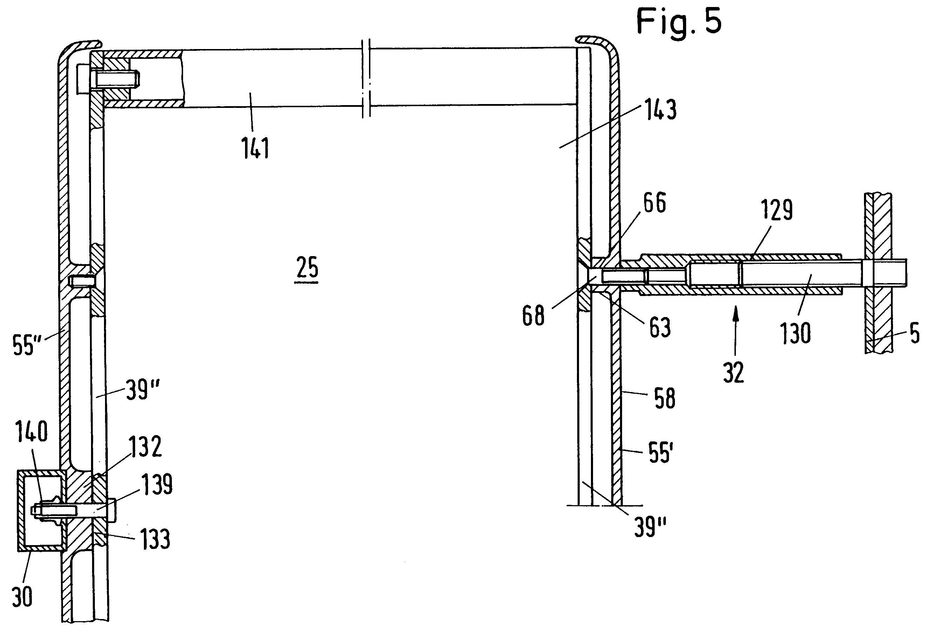

Das Befestigungselement 32, mit dem die doppelarmigen Hutablagen 25 an den Längsseiten 5 und 6 des Eisenbahnwaggons 1 befestigt werden, ist in Fig. 5 im einzelnen dargestellt. Das Befestigungselement 32 ist wiederum als Ausgleichseinrichtung ausgebildet, mit der es möglich ist, Maßtoleranzen beim Einbau der Hutablage 25 einfach auszugleichen. Die der Längsseite 5 bzw. 6 zugewandte Blende 55' ist grundsätzlich gleich ausgebildet wie die Blende 55 gemäß den Fig. 16 und 17. Darum werden im folgenden nur die unterschiedlichen Merkmale der Blende 55' näher erläutert. Wie Fig. 5 zeigt, ist die Gewindebohrung 66 im Vorsprung 63 als Durchgangsbohrung ausgebildet, die sich bis zur Außenseite 58 der Blende erstreckt. Auf der der Längsseite 5 zugewandten Seite der Blende 55' ist eine Gewindehülse 129 vorgesehen, die auf einem senkrecht von der entsprechenden Längsseite 5 bzw. 6 des Eisenbahnwaggons 1 abstehenden Gewindezapfen 130 sitzt. In die Gewindehülse 129 ist die Schraube 68 geschraubt, die im Vergleich zu den vorigen Ausführungsformen länger ausgebildet ist. Durch Verstellen der Gewindehülse 129 auf dem Gewindezapfen 130 kann der Abstand der Blende 55' von der Längsseite 5, 6 stufenlos eingestellt werden, um in dieser Richtung bestehende Maßtoleranzen beim Einbau berücksichtigen zu können. In Fig. 5 ist nur die eine Hälfte der Blende 55' dargestellt. Die andere Hälfte ist entsprechend spiegelsymmetrisch ausgebildet.

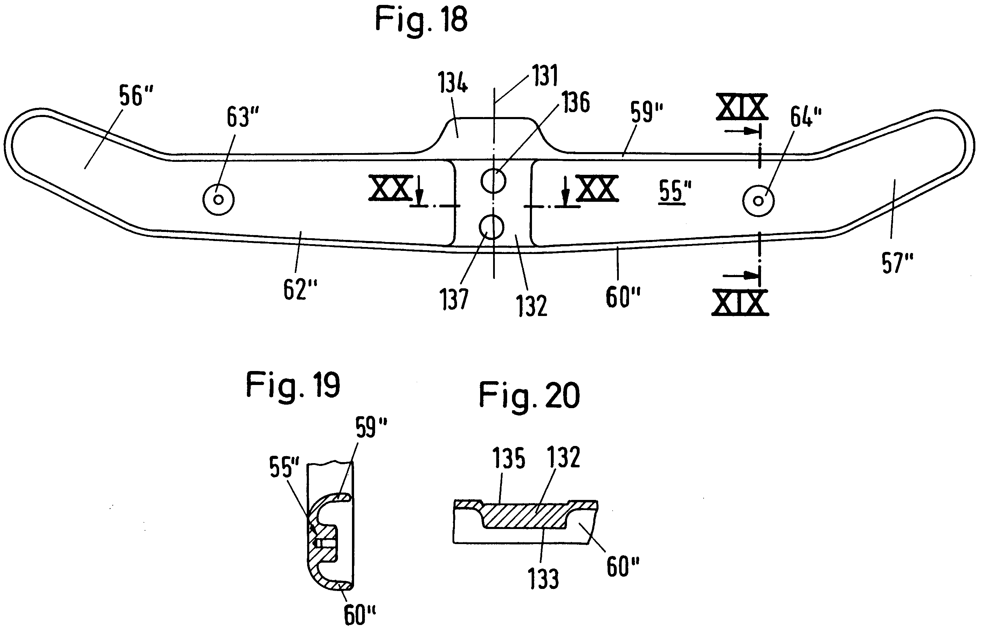

Die gangseitige Blende 55'' wird an der vertikalen Stütze 30 befestigt (Fig. 5 und 6). Wie Fig. 18 zeigt, ist die Blende 55'' spiegelsymmetrisch zu ihrer Quermittelebene 131 ausgebildet. Die Querschnittsform (Fig. 19) entspricht vollständig der Querschnittsform der Blende 55. Die Endabschnitte 56'' und 57'' der Blende 55'' sind unter einem größeren stumpfen Winkel zum Mittelstück 62 geneigt als bei der Blende 55. Dementsprechend hat auch der Träger 39'' eine entsprechende Umrißform. Die Blende 55'' weist an der Innenseite in halber Länge eine Verdickung 132 auf, die sich zwischen den beiden Rändern 59'' und 60'' erstreckt. Die Verdickung 132 hat in Ansicht (Fig. 18) sowie im Querschnitt Rechteckform. Die Stirnseite 133 der Verdickung 132 verläuft eben und bildet eine Anlagefläche für den Träger 39'' (Fig. 5). Damit liegt die Blende 55'' nicht nur mit den Vorsprüngen 63'' und 64'', sondern auch mit der Verdickung 132 am Träger 39'' an.

Der obere Rand 59'' ist in Höhe der Verdickung 132 mit einer Verbreiterung 134 versehen, die in der Einbaulage aufwärts verläuft und mit der die Blende 55'' an der Stütze 30 flächig anliegt.

Die Blende 55'' ist in Höhe der Verdickung 132 außenseitig mit einer flachen Vertiefung 135 versehen, die sich über die Höhe der Blende erstreckt und deren Breite der Breite der Stütze 30 entspricht. In der Einbaulage greift die Stütze 30 in diese außenseitige Vertiefung 135 ein (Fig. 5), wodurch die Blende 55'' und damit die Hutablage 25 quer zur Stütze 30 lagegesichert ist.

Die Verdickung 132 wird von zwei Bohrungen 136 und 137 durchsetzt, durch welche Befestigungsschrauben 138, 139 (Fig. 5 und 6) ragen. Sie werden in innerhalb der Stütze 30 befestigte Blindnietmuttern 140 (Fig. 5) geschraubt.

Die Hutablage 25 ist grundsätzlich gleich ausgebildet wie die Wandablage 20 gemäß den Fig. 29 bis 32. Sie hat seitliche Profilrohre 141, 142 (Fig. 6), die parallel zueinander verlaufen und deren beide Enden jeweils durch den Träger 39'' in der beispielsweise anhand von Fig. 31 beschriebenen Weise verbunden sind. Zwischen den Profilrohren und den Trägern 39'' liegt die Ablagefläche 143, die im bevorzugten Ausführungsbeispiel wiederum durch ein Drahtgitter gebildet ist, aber auch aus Kunststoff, aus Metall, aus Holz, aus einem Lochblech und dgl. gebildet sein kann. Lediglich die Befestigung der Hutablagen 25 erfolgt, wie anhand der Fig. 5 und 6 im einzelnen erläutert worden ist, auf andere Weise als die Befestigung der Wandablage 20. Die Ablagefläche 143 ist in halber Breite der Hutablage 25 mit einer Erhöhung 144 (Fig. 6) versehen, durch welche die Ablagefläche 143 in zwei Hälften unterteilt wird. Bei Ausbildung der Ablagefläche 143 als Drahtgitter sind die Drähte, wie Fig. 6 zeigt, in diesem mittleren Bereich dreieckförmig aufwärts gebogen, wodurch die gewünschte Unterteilung gewährleistet ist. Die Gepäckablagen 20 bis 23 sind in ihren Abmessungen größer als die mit Abstand darunter befindlichen Klein- und Hutablagen 24 und 25.

Die Hutablage kann aber auch, wie Fig. 9 zeigt, nur einarmig sein, d.h. sie besteht nur aus der einen Hälfte der Hutablage 25 gemäß den Fig. 5 und 6. Im übrigen ist diese einarmige Hutablage 25a gleich ausgebildet wie die Hutablage 25 und in gleicher Weise an der Stütze 30 sowie an der entsprechenden Längsseite 5 bzw. 6 des Eisenbahnwaggons 1 befestigt wie die Hutablage 25.

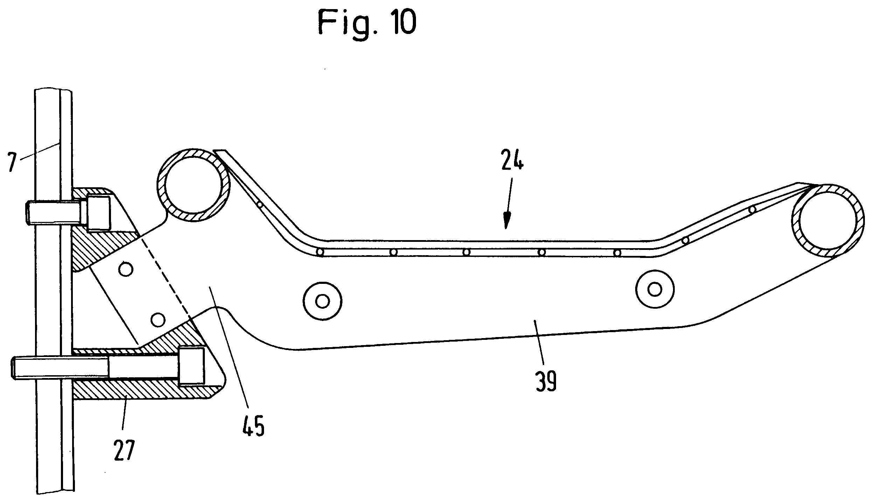

Die Ausbildung der Kleinablage 24 ergibt sich aus den Fig. 2 und 10. Die Kleinablage 24 ist grundsätzlich gleich ausgebildet wie die Wandablage 20, jedoch hat sie geringfügig kleinere Abmessungen. Dementsprechend haben die Blenden 55 und die Träger 39 für die Kleinablagen 24 entsprechend kleinere Abmessungen. Wie Fig. 10 zeigt, werden die Träger 39 der Kleinablage 24 mit dem Ansatz 45 in das Befestigungselement 27 gesteckt, das in der beschriebenen Weise an der Längsseite 5, 6 oder an der entsprechenden Querwand 7 bis 12 des Eisenbahnwaggons 1 befestigt ist. Vorteilhaft hat der Ansatz 45 des kleineren Trägers 39 gleiche Abmessungen wie der Ansatz 45 der Träger 39 für die Gepäckablagen. Dadurch können auch für die Hutablagen 24 die gleichen Befestigungselemente 27 eingesetzt werden wie für die Gepäckablagen 20 bis 23.

Die Endablagen 21 und 21' (Fig. 1) haben Rechteckform. Die eine Schmalseite wird durch den Träger 39 und die aufgesetzte Blende 55 gebildet. Mit dem Ansatz 45 dieses Trägers 39 wird die Endablage 21, 21' in den entsprechenden Schlitz 109, 110 des Befestigungselementes 29 auf der Stütze 30 gesteckt. Dieser Träger 39 befindet sich somit am gangseitigen Ende der Endablage 21, 21'. Die daran anschließende Längsseite wird durch das Profilrohr gebildet, das über die gegenüberliegende Schmalseite ragt. Dieses überstehende Profilrohrende bildet das Anschlußstück 37, mit dem die Endablage auf einen der Vorsprünge 80, 81 des Befestigungselementes 28 in der beschriebenen Weise geschoben wird. Die Ablagefläche dieser Endablagen 21, 21' wird bevorzugt durch eine Drahtgitter gebildet, kann aber wieder aus einem Lochblech, aus Kunststoff, aus Textil, aus Holz, aus Metall und dgl. bestehen.

Die Hutablage 26 ist rechteckförmig ausgebildet (Fig. 1). Die Längsseiten werden von jeweils einem Träger 39 gebildet, der die an den Schmalseiten vorgesehenen Profilrohre miteinander verbindet. Die Ansätze 45 der Träger 39 werden in der beschriebenen Weise mit den Befestigungselementen 27 verbunden, die an den Längsseiten 5, 6 des Eisenbahnwaggons 1 befestigt sind. Im übrigen ist die Hutablage, abgesehen von den Abmessungen, gleich ausgebildet wie die Wandablage 20.

Das beschriebene Ablagesystem wird durch einen Baukasten gebildet, der als Baukastenteile die Träger 39, 39'', die als Knotenpunkte dienenden Befestigungselemente 27, 29, die Ausgleichseinrichtungen 28, 31, 32 und die Ablageflächen 44, 53 aufweist. Mit Hilfe dieser Baukastenteile kann jede Ablagenausführung zusammengebaut und im Eisenbahnwaggon entsprechend eingebaut werden. Lediglich die Ablagefläche 44, 53 muß zweckmäßig in ihrer Größenausführung waggongerecht festgelegt und gefertigt werden. Die Träger 39, 39'' sind hinsichtlich ihrer Festigkeit so ausgebildet, daß sie die vorgeschriebenen Festigkeitswerte zuverlässig erfüllen. Die Träger sind vorteilhaft als Stahlstanzteile ausgeführt, die in der Einbaulage hochkant angeordnet sind. Ihr Widerstandsmoment gegen Biegen in ihrer Ebene ist dadurch sehr hoch. Die Blenden 55, 55', 55'' sind vorteilhaft Aluminiumgußblenden, die allseits so geformt sind, daß keine Verletzungsgefahr besteht. Sie sind an den Träger 39, 39'' so angepaßt, daß sie ihn völlig umhüllen. Dadurch haben die Ablagen ein besonders schönes Aussehen. Je nach Verwendungszweck kann der Träger 39, 39'' in seiner Form und Länge unterschiedlich sein. Der Träger 39, 39'' und die Blende 55, 55', 55'' werden miteinander so verschraubt, daß die Blende an ihrer Oberseite nicht unterbrochen wird bzw. kein Schraubenkopf von außen sichtbar ist.

Die Befestigungselemente 27, 29, welche Knotenpunkte bilden, sind vorzugsweise als Formteile aus Aluminium ausgebildet. Sie haben die Aufgabe, die Träger 39, 39'' bzw. die Stütze 30 bzw. die Wandbefestigung in einem Punkt (Knotenpunkt) als Verbindungselement miteinander zu verklemmen. In die Schlitze 90, 109, 110 lassen sich die Träger 39, 39'' mit ihren Ansätzen 45 leicht einschieben und dort in der beschriebenen Weise mit Klemmschrauben zuverlässig verklemmen.

Die Ausgleichseinrichtungen 28, 31, 32 stellen sicher, daß Maßtoleranzen im Eisenbahnwaggon 1 einfach und genau ausgeglichen werden können. Aus diesem Grunde sind die längsseitig, d.h. an der Längsseite 5 bzw. 6 des Eisenbahnwaggons 1 angeordneten Wandbefestigungspunkte mit dieser Ausgleichseinrichtung versehen.

Die Ablageflächen werden in der Regel aus zwei Profilrohren und einem Drahtgitter in bestimmter Größe gebildet. Die Profilrohre werden an den Stirnseiten durch die Träger 39, 39'' miteinander verbunden. Das Drahtgitter wird mit den gestanzten Trägern durch Aufpunkten verbunden.

Infolge der Ausbildung als Baukastensystem können die Einzelteile der Ablage jederzeit ausgetauscht werden. Auch ist es möglich, unterschiedlichste Eisenbahnwaggons mit den verschiedenen Ablagen zu versehen. Die Ausrüstung der Eisenbahnwaggons bereitet infolge des Baukastensystems keine Schwierigkeiten. Die Ablage selbst ist robust ausgebildet, weist keine scharfen Kanten und Ecken auf und läßt sich leicht reinigen.

## Patentansprüche

1. Ablage für Gepäck, Hüte und dgl., insbesondere zum Einbau in Eisenbahnwaggons, mit einer Ablagefläche (44, 53), die an mindestens einem Träger (39, 39'') befestigt ist, der über mindestens ein Anschlußteil (27 bis 29, 31, 32) an einer Halterung, wie einer Stütze, einer Wand oder dgl., befestigt ist,
**dadurch gekennzeichnet**, daß der Träger (39, 39'') mit Seitenteilen (35, 36, 38), die zum Träger senkrecht angeordnet sind und an denen die Ablagefläche (44, 53) befestigt ist, und mit dem Anschlußteil (27 bis 29, 31, 32) lösbar verbunden ist.

2. Ablage nach Anspruch 1,
dadurch gekennzeichnet, daß die Seitenteile (35, 36, 28) Profilrohre sind, an denen der Träger (39, 39'') befestigt ist.

3. Ablage nach Anspruch 1 oder 2,
dadurch gekennzeichnet, daß der Träger (39, 39'') die Enden jeweils zweier Seitenteile (35, 36, 38) miteinander verbindet und plattenförmig ausgebildet ist.

4. Ablage nach einem der Ansprüche 1 bis 3,
dadurch gekennzeichnet, daß der Träger (39, 39'') in der Einbaulage hochkant angeordnet ist.

5. Ablage nach einem der Ansprüche 1 bis 4,
dadurch gekennzeichnet, daß der Träger (39, 39'') ein Stanzteil ist.

6. Ablage nach einem der Ansprüche 1 bis 5,
dadurch gekennzeichnet, daß der Träger (39) mindestens einen Steckansatz (45) aufweist, mit dem er mit dem Anschlußteil (27, 29) steckverbunden ist.

7. Ablage nach Anspruch 6,
dadurch gekennzeichnet, daß der Steckansatz (45) laschenförmig und im wesentlichen rechteckförmig ausgebildet ist.

8. Ablage nach Anspruch 6 oder 7,
dadurch gekennzeichnet, daß der Steckansatz (45) kraftschlüssig am Anschlußteil (27, 29) gehalten ist.

9. Ablage nach Anspruch 8,
dadurch gekennzeichnet, daß das Anschlußteil (27, 29) mindestens eine schlitzförmige Aufnahmeöffnung (90; 109, 110) für den Steckansatz (45) des Trägers (39) aufweist und zwei stumpfwinklig zueinander liegende schlitzförmige Aufnahmeöffnungen (109, 110) hat.

10. Ablage nach einem der Ansprüche 1 bis 9,
dadurch gekennzeichnet, daß das Anschlußteil (29) eine Stecköffnung (102) aufweist, die bodenseitig offen ist und vorzugsweise wenigstens zwei Durchtrittsöffnungen (87, 88) für Befestigungsschrauben (123, 124) oder dgl. aufweist.

11. Ablage nach einem der Ansprüche 6 bis 10,
dadurch gekennzeichnet, daß das Anschlußteil (27, 29) wenigstens ein Klemmstück (117 bis 120) aufweist, mit dem der Steckansatz (45) des Trägers (39) im Anschlußteil (27, 29) festklemmbar ist.

12. Ablage nach einem der Ansprüche 1 bis 11,
dadurch gekennzeichnet, daß die Ablage (20 bis 26) quer zur Halterung (5 bis 12) einstellbar ist.

13. Ablage nach Anspruch 12,
dadurch gekennzeichnet, daß zur Einstellung der Ablage (20 bis 26) eine Ausgleichseinrichtung (27, 28, 31, 32) vorgesehen ist.

14. Ablage nach Anspruch 13,
dadurch gekennzeichnet, daß die Ausgleichseinrichtung (28, 31) ein Trägerteil (72, 83) aufweist, mit dem sie an der Halterung (5 bis 12) befestigbar ist und von dem mindestens ein Ansatz (79, 80; 85) quer absteht.

15. Ablage nach Anspruch 14,
dadurch gekennzeichnet, daß der Ansatz (79, 80; 85) ein Rohrstück ist.

16. Ablage nach Anspruch 15,
dadurch gekennzeichnet, daß auf den Ansatz (79, 80; 85) ein Anschlußstück (37) der Ablage (20 bis 23) aufschiebbar ist, das vorzugsweise auf dem Ansatz (79, 80; 85) verschiebbar und mit mindestens einem Klemmstück (82) festklemmbar ist, das eine Klemmschraube ist, die in einem auf dem Anschlußstück (37) vorgesehenen Vorsprung (81) untergebracht ist.

17. Ablage nach Anspruch 16,
dadurch gekennzeichnet, daß das Anschlußstück (37) der Ablage (20 bis 23) durch das freie Ende des Profilrohres (36) gebildet ist.

18. Ablage nach einem der Ansprüche 14 bis 17,
dadurch gekennzeichnet, daß das Trägerteil (72, 83) plattenförmig und vorzugsweise herzförmig ausgebildet ist.

19. Ablage nach Anspruch 13,
dadurch gekennzeichnet, daß die Ausgleichseinrichtung (27, 28) durch das Anschlußteil gebildet ist.

20. Ablage nach Anspruch 13,
dadurch gekennzeichnet, daß die Ausgleichseinrichtung (32) eine auf einem ortsfesten Gewindezapfen (130) sitzende Gewindehülse (129) aufweist, in die eine Schraube (68) zur Befestigung des Trägers (39'') geschraubt ist.

21. Ablage nach einem der Ansprüche 1 bis 20,
dadurch gekennzeichnet, daß die Ablage (20 bis 26) einen erhöhten Rand aufweist.

22. Ablage nach einem der Ansprüche 1 bis 21,
dadurch gekennzeichnet, daß der Träger (39, 39'') schräg aufwärts verlaufende Endstücke (47, 48) aufweist und außenseitig von einer Blende (55, 55', 55'') abgedeckt ist, die in ihrer Umrißform dem Träger (39, 39'') angepaßt ist.

23. Ablage nach einem der Ansprüche 1 bis 22,
dadurch gekennzeichnet, daß die Ablagefläche (44, 53) dem Verlauf des oberen Randes des Trägers (39, 39'') angepaßt ist.

24. Ablage nach Anspruch 22 oder 23,
dadurch gekennzeichnet, daß der Träger (39, 39'') in der Blende (55, 55', 55'') liegt.

25. Ablage nach Anspruch 24,
dadurch gekennzeichnet, daß die Blende (55, 55', 55'') in gleicher Richtung gebogen verlaufende Ränder (59, 60) aufweist, die den Träger (39, 39'') übergreifen.

26. Ablage nach einem der Ansprüche 22 bis 25,
dadurch gekennzeichnet, daß ein Mittelstück (62, 62'') der Blende (55, 55', 55'') mindestens zwei Anlageflächen (65) für den Träger (39, 39'') aufweist.

27. Ablage nach Anspruch 26,
dadurch gekennzeichnet, daß die Anlageflächen (65) für den Träger (39, 39'') durch die Stirnseiten von Vorsprüngen (63, 64; 63'', 64'') des Mittelstückes (62, 62'') gebildet sind.

28. Ablage nach Anspruch 26 oder 27,
dadurch gekennzeichnet, daß das Mittelstück (62'') eine Verdickung (132) aufweist, deren Stirnseite eine weitere Anlagefläche (133) für den Träger (39'') bildet.

29. Ablage nach Anspruch 28,
dadurch gekennzeichnet, daß die Verdickung (132) im Bereich zwischen den beiden Vorsprüngen (63'', 64'') liegt.

30. Ablage nach einem der Ansprüche 22 bis 29,
dadurch gekennzeichnet, daß die Blende (55, 55', 55'') einstückig ausgebildet ist und lösbar am Träger (39, 39'') befestigt ist.

31. Ablage nach einem der Ansprüche 22 bis 30,
dadurch gekennzeichnet, daß die Blende (55, 55'') außenseitig eine Vertiefung (135) aufweist, in welche die als Stütze (30) ausgebildete Halterung eingreift.

32. Ablage nach einem der Ansprüche 1 bis 31,
daß die Ablagefläche (44, 53) durch ein Drahtgitter gebildet ist, bei dem die Drahtenden zumindest an der Aufschiebeseite (128) der Gepäckstücke hinter den Seitenteil (38) der Ablage (20 bis 26) befestigt sind.

33. Ablage nach einem de Ansprüche 1 bis 32,
dadurch gekennzeichnet, daß die Ablage (22, 23) L-förmig ausgebildet ist.

34. Ablage nach einem der Ansprüche 1 bis 44,
dadurch gekennzeichnet, daß die Ablagefläche in halber Breite der Ablagefläche (25) eine Erhöhung (144) aufweist.

35. Ablage nach Anspruch 34,
dadurch gekennzeichnet, daß die Erhöhung (144) durch einen entsprechenden Verlauf der Ablagefläche selbst gebildet ist.

## Claims

1. A rack for luggage, hats and the like, in particular for installation in railway carriages, comprising a deposit surface (44, 53) fixed to at least one carrier (39, 39'') which is fixed to a mounting, such as a support, a wall or the like, by at least one connecting member (27 to 29, 31, 32), characterised in that the carrier (39, 39'') is detachably connected to side parts (35, 36, 38), which are arranged perpendicularly to the carrier and to which the deposit surface (44, 53) is fixed, and to the connecting member (27 to 29, 31, 32).

2. A rack according to claim 1, characterised in that the side parts (35, 36, 38) are profiled tubes, to which the carrier (39, 39'') is fixed.

3. A rack according to claim 1 or 2, characterised in that the carrier (39, 39'') interconnects the ends of two side parts (35, 36, 38) and is plate-shaped.

4. A rack according to any one of claims 1 to 3, characterised in that the carrier (39, 39'') is arranged edgewise in the installed position.

5. A rack according to any one of claims 1 to 4, characterised in that the carrier (39, 39'') is a stamped part.

6. A rack according to any one of claims 1 to 5, characterised in that the carrier (39) has at least one insertion projection (45), by means of which it is inserted into the connecting member (27, 29).

7. A rack according to claim 6, characterised in that the insertion projection (45) is tab-shaped and is substantially rectangular.

8. A rack according to claim 6 or 7, characterised in that the insertion projection (45) is held on the connecting member (27, 29) by friction.

9. A rack according to claim 8, characterised in that the connecting member (27, 29) has at least one slot-type receiving opening (90; 109, 110) for the insertion projection (45) of the carrier (39) and has two slot-type receiving openings (109, 110) arranged at an obtuse angle to one another.

10. A rack according to any one of claims 1 to 9, characterised in that the connecting member (29) has an insertion opening (102) which is open at the base and preferably has at least two passage openings (87, 88) for fastening screws (123, 124) or the like.

11. A rack according to any one of claims 6 to 10, characterised in that the connecting member (27, 29) has at least one clamping member (117 to 120), by means of which the insertion projection (45) of the carrier (39) can be clamped in the connecting member (27, 29).

12. A rack according to any one of claims 1 to 11, characterised in that the rack (20 to 26) is adjustable transversely to the mounting (5 to 12).

13. A rack according to claim 12, characterised in that an adjusting arrangement (27, 28, 31, 32) is provided for adjusting the rack (20 to 26).

14. A rack according to claim 13, characterised in that the adjusting arrangement (28, 31) has a carrying member (72, 83), by means of which it is fixable to the mounting (5 to 12) and from which at least one projection (79, 80; 85) projects transversely.

15. A rack according to claim 14, characterised in that the projection (79, 80; 85) is a tubular member.

16. A rack according to claim 15, characterised in that a connecting part (37) of the rack (20 to 23) can be pushed onto the projection (79, 80; 85), is preferably displaceable on the projection (79, 80; 85) and can be clamped thereto by means of at least one clamping member (82) being a clamping screw housed in a projection (81) provided on the connecting part (37).

17. A rack according to claim 16, characterised in that the connecting part (37) of the rack (20 to 23) is formed by the free end of the profiled tube (36).

18. A rack according to any one of claims 14 to 17, characterised in that the carrying member (72, 83) is plate-shaped and preferably heart-shaped.

19. A rack according to claim 13, characterised in that the adjusting arrangement (27, 28) is formed by the connecting member.

20. A rack according to claim 13, characterised in that the adjusting arrangement (32) has a threaded sleeve (129) mounted on a fixed threaded pin (130), a screw (68) for fixing the carrier (39'') being screwed into the threaded sleeve (129).

21. A rack according to any one of claims 1 to 20, characterised in that the rack (20 to 26) has a raised edge.

22. A rack according to any one of claims 1 to 21, characterised in that the carrier (39, 39'') has end pieces (47, 48) extending obliquely upwards and is covered on the outside by a cover (55, 55', 55''), the contours of which are adapted to the carrier (39, 39'').

23. A rack according to any one of claims 1 to 22, characterised in that the deposit surface (44, 53) is adapted to the shape of the upper edge of the carrier (39, 39'').

24. A rack according to claim 22 or 23, characterised in that the carrier (39, 39'') is arranged inside the cover (55, 55', 55'').

25. A rack according to claim 24, characterised in that the cover (55, 55', 55'') has edges (59, 60) bent in the same direction and engaging over the carrier (39, 39'').

26. A rack according to any one of claims 22 to 25, characterised in that a central portion (62, 62'') of the cover (55, 55', 55'') has at least two contact surfaces (65) for the carrier (39, 39'').

27. A rack according to claim 26, characterised in that the contact surfaces (65) for the carrier (39, 39'') are formed by the end surfaces of projections (63, 64; 63'', 64'') of the central portion (62, 62'').

28. A rack according to claim 26 or 27, characterised in that the central portion (62'') has a thickening (132), the end surface of which forms a further contact surface (133) for the carrier (39'').

29. A rack according to claim 28, characterised in that the thickening (132) is located in the region between the two projections (63'', 64'').

30. A rack according to any one of claims 22 to 29, characterised in that the cover (55, 55', 55'') is formed in one piece and is detachably fixed to the carrier (39, 39'').

31. A rack according to any one of claims 22 to 30, characterised in that the outside of the cover (55, 55'') is provided with a recess (135), in which the mounting formed as a support (30) engages.

32. A rack according to any one of claims 1 to 31, characterised in that the deposit surface (44, 53) is formed by a wire mesh, wherein the wire ends are fixed behind the side part (38) of the rack (20 to 26) at least on the side (128) from which the pieces of luggage are deposited.

33. A rack according to any one of claims 1 to 32, characterised in that the rack (22, 23) is L-shaped.

34. A rack according to any one of claims 1 to 44, characterised in that the deposit surface (25) has an elevation (144) halfway along its width.

35. A rack according to claim 34, characterised in that the elevation (144) is formed by appropriate formation of the deposit surface itself.

## Revendications

1. Etagère servant de porte-bagages, porte-chapeaux et similaire, destinée à être montée dans des wagons de chemin de fer, comportant une tablette (44, 53) qui est fixée à au moins un support (39, 39'') qui est fixé par au moins une pièce de raccordement (27 à 29, 31, 32) à une monture telle qu'un montant, une paroi ou similaire, caractérisée en ce que le support (39, 39'') est relié de manière détachable à des pièces latérales (35, 36, 38) qui sont agencées perpendiculairement au support et sur lesquelles la tablette (44, 53) est fixée, et à la pièce de raccordement (27 à 29, 31, 32).

2. Etagère selon la revendication 1, caractérisée en ce que les pièces latérales (35, 36, 38) sont des tubes profilés sur lesquels est fixé le support (39, 39'').

3. Etagère selon l'une ou l'autre des revendications 1 et 2, caractérisée en ce que le support (39, 39'') relie les unes aux autres les extrémités de deux pièces latérales (35, 36, 38) respectives et est réalisé en forme de plaque.

4. Etagère selon l'une quelconque des revendications 1 à 3, caractérisée en ce que le support (39, 39'') est agencé debout dans la position de montage.

5. Etagère selon l'une quelconque des revendications 1 à 4, caractérisée en ce que le support (39, 39'') est une pièce découpée.

6. Etagère selon l'une quelconque des revendications 1 à 5, caractérisée en ce que le support (39) présente au inoins un bout d'enfichage (45) avec lequel il est relié par enfichage avec la pièce de raccordement (27, 29).

7. Etagère selon la revendication 7, caractérisée en ce que le bout d'enfichage (45) est réalisé en forme de languette et sensiblement rectangulaire.

8. Etagère selon l'une ou l'autre des revendications 6 et 7, caractérisée en ce que le bout d'enfichage (45) est maintenu sur la pièce de raccordement (27, 29) par blocage à coopération de forces.

9. Etagère selon la revendication 8, caractérisée en ce que la pièce de raccordement (27, 29) présente au moins une ouverture de réception (90 ; 109, 110) en forme de fente destinée à recevoir le bout d'enfichage (45) du support (39), et possède deux ouvertures de réception (109, 110) en forme de fentes qui s'étendent en angle obtus l'une par rapport à l'autre.

10. Etagère selon l'une quelconque des revendications 1 à 9, caractérisée en ce que la pièce de raccordement (29) présente une ouverture d'enfichage (102) qui est ouverte du côté du fond et qui présente de préférence au moins deux ouvertures traversantes (87, 88) pour des vis de fixation (123, 124) ou similaires.

11. Etagère selon l'une quelconque des revendications 6 à 10, caractérisée en ce que la pièce de raccordement (27, 29) présente au moins une pièce de serrage (117 à 120) avec laquelle le bout d'enfichage (45) du support (39) est susceptible d'être serré dans la pièce de raccordement (27, 29).

12. Etagère selon l'une quelconque des revendications 1 à 11, caractérisée en ce que l'étagère (20 à 26) est réglable transversalement à la monture (5 à 12).

13. Etagère selon la revendication 12, caractérisée en ce qu'il est prévu un moyen de compensation (27, 28, 31, 32) pour régler l'étagère (20 à 26).

14. Etagère selon la revendication 13, caractérisée en ce que le moyen de compensation (28, 31) présente un élément de support (72, 83) avec lequel celui-ci est susceptible d'être fixé sur la monture (5 à 12) et depuis lequel au moins un épaulement (79, 80 ; 85) fait saillie transversalement.

15. Etagère selon la revendication 14, caractérisée en ce que l'épaulement (79, 80 ; 85) est une pièce tubulaire.

16. Etagère selon la revendication 15, caractérisée en ce que sur l'épaulement (70, 80 ; 85) peut coulisser une pièce de raccordement (37) de l'étagère (20 à 23), qui est de préférence déplaçable sur l'épaulement (79, 80 ; 85) et qui est susceptible d'être serrée avec au moins une pièce de serrage (82) qui est une vis de serrage, laquelle est logée dans une saillie (81) prévue dans la pièce de raccordement (37).

17. Etagère selon la revendication 16, caractérisée en ce que la pièce de raccordement (37) de l'étagère (20 à 23) est formée par l'extrémité libre du tube profilé (36).

18. Etagère selon l'une quelconque des revendications 14 à 17, caractérisée en ce que l'élément de support (72, 83) est réalisé en forme de plaque et de préférence en forme de coeur.

19. Etagère selon la revendication 13, caractérisée en ce que le moyen de compensation (27, 28) est formé par la pièce de raccordement.

20. Etagère selon la revendication 13, caractérisée en ce que le moyen de compensation (32) présente une douille filetée (129) fixée sur une tige filetée (130) stationnaire, une vis (68) destinée à la fixation du support (39'') étant vissée dans ladite douille filetée.

21. Etagère selon l'une quelconque des revendications 1 à 20, caractérisée en ce que l'étagère (20 à 26) présente un bord surélevé.

22. Etagère selon l'une quelconque des revendications 1 à 21, caractérisée en ce que le support (39, 39'') présente des pièces d'extrémité (47, 48) inclinées vers le haut et en ce qu'il est recouvert du côté extérieur par un panneau (55, 55', 55'') dont le contour est adapté au support (39, 39'').

23. Etagère selon l'une quelconque des revendications 1 à 21, caractérisée en ce que la tablette (44, 53) est adaptée au tracé du bord supérieur du support (39, 39'').

24. Etagère selon l'une ou l'autre des revendications 22 et 23, caractérisée en ce que le support (39, 39'') se trouve dans le panneau (55, 55', 55'').

25. Etagère selon la revendication 24, caractérisée en ce que le panneau (55, 55', 55'') présente des bords (59, 60) recourbés dans la même direction, lesdits bords recouvrant le support (39, 39'').

26. Etagère selon l'une quelconque des revendications 22 à 25, caractérisée en ce qu'une pièce médiane (62, 62'') du panneau (55, 55', 55'') présente au moins deux surfaces d'appui (65) pour le support (39, 39'').

27. Etagère selon la revendication 26, caractérisée en ce que les surfaces d'appui (65) pour le support (39, 39'') sont formées par les faces frontales de saillies (63, 64 ; 63'', 64'') de la pièce médiane (62, 62'').

28. Etagère selon l'une ou l'autre des revendications 26 et 27, caractérisée en ce que la pièce médiane (62'') présente un renflement (132) dont la face frontale forme une autre surface d'appui (133) pour le support (39'').

29. Etagère selon la revendication 28, caractérisée en ce que le renflement (132) se trouve dans la région située entre les deux saillies (63'', 64'').

30. Etagère selon l'une quelconque des revendications 22 à 29, caractérisée en ce que le panneau (55, 55', 55'') est réalisé d'une seule pièce, et en ce qu'il est fixé de manière détachable sur le support (39, 39'').

31. Etagère selon l'une quelconque des revendications 22 à 30, caractérisée en ce que le panneau (55, 55'') présente sur le côté extérieur un creux (135) dans lequel s'engage la monture réalisée comme montant (30).

32. Etagère selon l'une quelconque des revendications 1 à 31, caractérisée en ce que la tablette (44, 53) est formée par une grille en fils de fer dans laquelle les extrémités des fils sont fixées au moins sur le coté de mise en place (128) des bagages derrière l'élément latéral (38) du porte-bagages (20 à 26).

33. Etagère selon l'une quelconque des revendications 1 à 32, caractérisée en ce que l'étagère (22, 23) est réalisée en forme de L.

34. Etagère selon l'une quelconque des revendications 1 à 33, caractérisée en ce que la tablette présente un relief (144) au milieu de la largeur de la tablette (25).

35. Etagère selon la revendication 34, caractérisée en ce que le relief (144) est formé par un tracé correspondant de la tablette elle-même.
